(19) **Europäisches Patentamt / European Patent Office / Office européen des brevets**

(11) **EP 1 355 470 B1**

(12) **EUROPEAN PATENT SPECIFICATION**

(45) Date of publication and mention
of the grant of the patent:
**01.05.2013 Bulletin 2013/18**

(51) Int Cl.:
**H04L 29/06** ^(2006.01)

(21) Application number: **02257284.6**

(22) Date of filing: **21.10.2002**

(54) **Method of providing a push delivery service**

Verfahren zum Bereitstellen von einem Push-Übertragungsdienst

Procédé permettant de fournir un service de distribution push

(84) Designated Contracting States:
**DE FR GB**

(30) Priority: **18.04.2002 JP 2002116312**

(43) Date of publication of application:
**22.10.2003 Bulletin 2003/43**

(73) Proprietor: **FUJITSU LIMITED**
**Kawasaki-shi,**
**Kanagawa 211-8588 (JP)**

(72) Inventors:
  • **Meifu, Yoshinobu,**
  **c/o Fujitsu Limited**
  **Kawasaki-shi,**
  **Kanagawa 211-8588 (JP)**
  • **Mori, Shinichiro,**
  **c/o Fujitsu Limited**
  **Kawasaki-shi,**
  **Kanagawa 211-8588 (JP)**

  • **Mizuma, Keiji,**
  **c/o Fujitsu Limited**
  **Kawasaki-shi,**
  **Kanagawa 211-8588 (JP)**
  • **Ishigami, Hiroshi,**
  **c/o Fujitsu Limited**
  **Kawasaki-shi,**
  **Kanagawa 211-8588 (JP)**

(74) Representative: **Hitching, Peter Matthew et al**
**Haseltine Lake LLP**
**Lincoln House, 5th Floor**
**300 High Holborn**
**London**
**WC1V 7JH (GB)**

(56) References cited:
**EP-A- 1 056 255       WO-A-01/54421**
**WO-A-02/13571       WO-A-99/45732**
**US-A- 5 572 221       US-A- 6 108 533**
**US-A1- 2001 056 369   US-A1- 2002 026 361**

**Description**

The present invention relates to a push delivery service providing method, an information providing service system, a server system and a user station suitable to provide a service that automatically delivers (pushes) information such as advertisements of shops and the like to users with mobile stations equipped with a global positioning system (hereinafter referred as GPS) or the like in a specific area.

With recent spread of mobile stations (user stations) such as portable telephones, portable communication terminals and the like, some enterprises provide a push delivery service of a push type (hereinafter referred as a push delivery service). The push delivery service is that a mobile station can automatically receive information when the information is delivered from a server system (a plurality of servers having a plurality of functions) to the mobile station irrespective of whether the power source of the mobile station is ON or OFF, or the mobile station is connected to the network or not. When receiving information from the server system, the mobile station notifies the user of it by an incoming indicator tone or the like, like when a mail is received in the wait state of a portable telephone, whereby the user knows that the information is notified. This method is said that the server system pushes information to the user since the user can obtain the information without connecting the mobile station to the network by himself/herself. Accordingly, the user can receive real-time information. To the contrary, a method in which the user connects to the network by himself/herself to obtain the information is said that the user pulls the information from the server system.

Push delivery service provider (hereinafter referred as an administrator) introduces a method of measuring (hereinafter referred as positioning) a position of a mobile station with GPS satellites. Namely, the GPS satellites search for a desired mobile station, register a position of the mobile station, and notify the mobile station of information.

The administrator has a common data format relating to a station's position among enterprises or the like joining to the push delivery service. With the GPS satellites, it is possible to provide the service in a wide area. In concrete, determination and retention of a station's position, acquisition of a position of a station of a third party, maintenance and exchange of information on a position of a station. An experiment of the push delivery with GPS satellites has been made recently.

There are two method of providing a contents push delivery service relating to advertisements of shops or the like to mobile stations in a specific area from the server system. The first method is that an ASP (Application Service Provider) periodically positions and confirms a mobile station in order to determine whether the mobile station is located in the specific area. Incidentally, the APS signifies an administrator who provides application software (hereinafter abbreviated as an application) of a computer to each user on a server system over the Internet. The second method is that a mobile station periodically transmits a measured position (a measured position of the station) positioned by itself to the ASP.

When the administrator provides the contents push delivery service relating to advertisements of shops or the like using a known technique, the base station delivers information on the basis of an area (a coverage area) covering mobile stations. However, an area in which the information is delivered is several kilometers square when the shape of the area is square, which is wide. This is the same even when the shape of the area is circular. The server system thus cannot accurately specify (pin-point) an advertisement of a shop or the like limited to the neighborhood of a position of the user.

In either method, the APS or the mobile station always positions a position of the mobile station using the GPS, so that loads of the portable telephone network and the server system for positioning are both increased. Further, since the mobile station and the portable telephone network periodically position a position of the station, a load for packet processing is increased.

When the user uses the position information service, the packet charge to be paid increases.

WO 01/54421 discloses a method and system in which data objects including area-specific information are provided to a mobile communication device. The device indicates a present physical location to a data object server, and the data object server returns a data object, such as an internet web page, wap page, or other information, which contains information specific to the area in which the device is presently located.

WO 99/45732 discloses a method, arrangement and apparatus for providing a mobile user with information retrievable from a database. The method comprises the steps of establishing a communications connection between a mobile station and a base station or base stations of a mobile communications network. The location of the mobile station is then determined on the basis of the base station or base stations, and this identified location information is processed in the mobile communications network so as to enable a retrieval of area related information relating to the determined location from the database. Said retrieved area related information is then transmitted to the mobile station.

The present invention provides a push delivery service providing method as defined by claim 1.

The method may include the features of any one or more of dependent claims 2 to 18.

The present invention also provides a push delivery service providing apparatus as defined by claim 19.

The present invention also provides a server system as defined by claim 20.

The server system may include the features of any one or more of dependent claims 21 to 24.

The present invention also provides a user station as defined by claim 25.

The user station may include the features of any one or more of dependent claims 26 to 33.

In the light of the above problems, an object of the present invention is to provide a push delivery service providing method, an information providing service system, a server system and a user station, wherein the user station itself predicts that the user station enters into any one of plural push delivery areas existing around the user station, whereby the frequency of positioning can be decreased and pinpoint push delivery of contents such as a shop advertisement and the like becomes possible.

The present invention therefore provides a push delivery service providing method used in a system delivering information to a user station comprising the steps of a transmitting step of transmitting attribute information including positions C and ranges R of a plurality of push delivery space ranges from a server system to the user station, a predicting step of comparing each of the ranges R of the attribute information (C, R) transmitted at the transmitting step with a self-predicted position (L1-a, L1-b, L1-c) predicted by the user station to predict that the user station belongs to any one of the push delivery space ranges, a positioning step of positioning a measurement end position L2 of the user station when the user station judges on the basis of a result of prediction at the predicting step that the user station belongs to the push delivery space range, a confirming step of comparing a corrected position obtained by correcting the measurement end position L2 obtained at the positioning step with the push delivery space range to confirm that the user station belongs to the push delivery space range, a requesting step of requesting, from the user station, the server system to deliver information attached to the push delivery space range on the basis of a result obtained at the confirming step, and a contents providing step of transmitting the delivery information from the server system to the user station in response to a request at the requesting step.

Accordingly, it becomes possible to decrease the frequency of positioning, and loads of the network and the positioning server required at the time of positioning. It is also possible to decrease the packet charge at the time of successive positioning. It becomes easy for the user station to receive the information push delivery service.

The present invention further provides an information providing service system delivering information to a user station comprising a server system for holding a plurality of balloon data elements in which each of a plurality of push delivery space range data elements having attribute information (C, R) including positions C and ranges R of push delivery space ranges is related with each piece of delivery information including various information or service information to be provided in the plural push delivery space ranges, and the user station for positioning a measurement start position L1 and a measurement end position L2 of the user station in push delivery space ranges, and transmitting and receiving data to and from the server system over a network, the user station judging on the basis of attribute information (C, R) transmitted from the server system and a self-predicted position (L1-a, L1-b, L1-c) predicted by the user station whether the user station belongs to a push delivery space range.

Accordingly, a consideration on whether the user station lies inside a cell plane or not becomes unnecessary, so that the administrator can freely design contents of push region setting. Additionally, a special radio protocol becomes unnecessary, so that investment for configuring the push delivery service providing system can be decreased.

The present invention still further provides an information providing service system comprising a server system and a user station, the server system comprising a database for holding the balloon data, a notifying unit for receiving a measurement start position L1 specified on the basis of a latitude, a longitude, an altitude, an azimuth and a tilt angle of the user station transmitted from the user station, extracting at least one of push delivery space range data element belonging to a predetermined radius having the measurement start position L1 as a center point from the database, and notifying the user station of at least one piece of attribute information (C, R) including a center position C and a radius R of at least one extracted push delivery space range data element, a providing unit, when the user station notified of the attribute information (C, R) from the notifying unit judges that a measurement end position L2 of the user station calculated from the measurement start position L1 and a direction of movement and a quantity of movement positioned by the user station belongs to a push delivery space range belonging to a sphere having a radius R having a center position C of the attribute information (C, R) notified from the notifying unit as a center point, the providing unit providing delivery information of balloon data corresponding to at least one piece of attribute information (C, R) judged to belong thereto to the user station, the user station comprising a positioning unit for positioning the latitude, the longitude, the altitude, the azimuth and the tilt angle, a transmitting unit for transmitting the latitude, the longitude, the altitude, the azimuth and the tilt angle positioned by the positioning unit to the server system, a pre-reading process unit for judging whether the user station belongs to the push delivery space range on the basis of attribute information (C, R) including a position C and a range R of at least one push delivery space range existing around the latitude, the longitude, the altitude, the azimuth and the tilt angle transmitted from the transmitting unit and a self-predicted position (L1-a, L1-b, L1-c) predicted by the user station by calculating movement information including a direction of movement and a quantity of movement of the user station, and a confirming unit for comparing a corrected position obtained by correcting a measurement end position L2 of the user station positioned by the positioning unit with at least one push delivery space range received by a receiving unit when the pre-reading process unit judges that the user station belongs to the push delivery space range to confirm that the user station belongs thereto.

Accordingly, pinpoint push delivery of contents such as a shop advertisement becomes possible.

The present invention still further provides an information providing service system comprises a server system and a user station, the server system comprising a database for holding the balloon data, a server receiving unit for receiving a measurement start position L1 specified on the basis of a latitude, a longitude, an altitude, an azimuth and a tilt angle of the user station transmitted from the user station, and movement information including a direction of movement and a quantity of movement of the user station, a calculating unit for calculating a self-predicted position (L1-a, L1-b, L1-c) predicted by the user station on the basis of the measurement start position L1 and the movement information received by the server receiving unit, a server transmitting unit for transmitting attribute information on at least one push delivery space range existing around the measurement start position L1 to the user station on the basis of a self-predicted position (L1-a, L1-b, L1-c) calculated by the calculating unit, a providing unit for receiving attribute information selected by the user station from at least one piece of attribute information transmitted from the server transmitting unit, and providing delivery information of balloon data corresponding to the attribute information to the user station, the user station comprising a positioning unit for positioning the measurement start position L1 and the measurement end position L2, and a transmitting unit for transmitting the measurement start position L1 or the measurement end position L2 positioned by the positioning unit to the server system.

Accordingly, high-speed processing becomes possible.

The present invention still further provides a server system equipped with a user station comprising a database for holding a plurality of balloon data elements in which each of a plurality of three-dimensional space range data elements having attribute information (C, R) including positions C and ranges R of three-dimensional space ranges is related with each of plural pieces of delivery information related with the plural three-dimensional space ranges, respectively, a notifying unit for extracting at least one three-dimensional space range data element within a predetermined distance from a measurement start position L1 of the user station transmitted from the user station from the database, and notifying the user station of at least one piece of extracted attribute information (C, R), and a providing unit, when the user station notified of attribute information (C, R) from the notifying unit judges that a measurement end position L2 of the user station calculated from the measurement start position L1, the direction of movement and the quantity of movement belongs to any one of a plurality of three-dimensional space ranges having positions C and ranges R included in attribute information (C, R) notified from the notifying unit, the providing unit providing delivery information of at least one balloon data element corresponding to at least one piece of attribute information (C, R) judged to belong thereto.

Since a measured position can be obtained on the user station's side, the frequency of transmission of data over the network can be decreased, which largely decreases the load on the network, and speeds up transmission and reception of data using the load.

The providing unit may judge whether the user station belongs to the three-dimensional space range on the basis of at least one piece of attribute information selected by the user station from attribute information (C, R) notified to the user station from the notifying unit and a self-predicted position (L1-a, L1-b, L1-c) predicted by the user station by calculating movement information including a direction of movement and a quantity of movement of the user station, position the measurement end position L2 when judging that the user station belongs to the three-dimensional space range, compare a corrected position obtained by correcting the measurement end position L2 with the three-dimensional space range to confirm that the user station belongs to the three-dimensional space range, and provide delivery information of balloon data corresponding to delivery information to the user station on the basis of a result of confirmation. Since the user station does calculation by itself, not transmitting data for calculation to the communication network, so that the load on the communication network is decreased.

The present invention still further provides a server system comprising a database for holding a plurality of balloon data elements in which each of a plurality of three-dimensional space range data elements having attribute information (C, R) relating to three-dimensional space ranges is related with each of plural pieces of delivery information attached to the three-dimensional space ranges, a notifying unit for receiving a measurement start position L1 of the user station, and notifying the user station of attribute information (C, R) on the measurement start position L1 and a plurality of three-dimensional space ranges corresponding to respective plural three-dimensional space range data elements within a predetermined distance, and a providing unit, when the user station notified of the attribute information (C, R) judges that a measurement end position L2 of the user station obtained on the basis of the measurement start position L1 and the direction of movement and the quantity of movement belongs to any one of three-dimensional space ranges determined on the basis of the attribute information (C, R), the providing unit providing delivery information of balloon data corresponding to plural pieces of attribute information (C, R) judged to belong thereto to the user station.

Accordingly, an enterprise or a shop can provide a direct, spontaneous advertisement to people who are moving, thus can provide a carefully thought out service such as a time service or the like. Additionally, the enterprise or the shop can place an advertisement individually to a group of customers of a specific age, sex or type of occupation.

When a measurement end position L2 of the user station obtained on the basis of the measurement start position L1 and the direction of movement and the quantity of movement is predicted and judged to belong to any one of three-dimensional space ranges determined on the basis of attribute information (C, R), the providing unit may position the measurement end position L2, compare a corrected position obtained by correcting the measurement end position L2 with the three-dimensional space range to confirm that the user station belongs to the three-dimensional space range, and provide delivery information of balloon data corresponding to the delivery information to the user station on the basis of a result of confirmation. Since a measured position can be obtained on the user station's side, the frequency of transmission of positioning data over the network can be largely decreased, and the load on the network can be largely diminished. As a result, transmission and reception of data can be sped up using the load.

The notifying unit may predict a self-predicted position (L1-a, L1-b, L1-c) of the user station on the basis of a measurement start position L1 of the user station, and notify of attribute information (C, R) on a plurality of three-dimensional space ranges existing around the self-predicted position (L1-a, L1-b, L1-c). The notifying unit may adjust a range of the attribute information (C, R) according to the number of the three-dimensional space range data elements within a predetermined number. Since a measured position can be obtained on not the server system's side but the user station's side, the frequency of transmission and reception of positioning data over the network can be largely decreased, and the load on the network can be largely diminished. As a result, transmission and reception of data can be sped up using the load.

The database may comprise a three-dimensional space range data holding unit for relating a position C and a range R of each of the plural three-dimensional space ranges with each type of the delivery information, and holding them, and a delivery information holding unit for holding delivery information of the plural three-dimensional space ranges. The database may further comprise a delivered information holding unit for relating an identifier of the user station, an identifier of each of the plural three-dimensional space ranges and information representing whether information has been transmitted or not with respect to the identifier of the user station with one another, and holding them. When the user station transmits a measured position of its own to the server system on the basis of a three-dimensional space range obtained by dividing a three-dimensional space and a service to be provided in the three-dimensional space range, service contents corresponding to the measured position is provided to the user station.

The present invention still further provides a server system equipped with a user station which can position a position, a direction of movement and a quantity of movement of its own on circular push delivery planes using GPS satellites, an azimuth sensor and a gyro sensor, the server system comprising a database for holding a plurality of balloon data elements in which each of a plurality of push delivery plane data elements having attribute information (C, R) including center positions C and radii R of push delivery planes is related with each of plural pieces of delivery information including various information or service information to be provided on the push delivery planes, a notifying unit for receiving a measurement start position L1 specified on the basis of a latitude, a longitude, an altitude, an azimuth and a tilt angle of the user station transmitted from the user station, extracting at least one push delivery plane data element belonging to a predetermined radius having the measurement start position L1 as a center point from the database, and notifying the user station of at least one piece of attribute information (C, R) including a center position C and a radius R of at least one extracted push delivery plane data element, and a providing unit, when the user station notified of the attribute information (C, R) from the notifying unit judges that a measurement end position L2 of the user station calculated from the measurement start position L1, and a direction of movement and a quantity of movement positioned by the user station belongs to a push delivery plane belonging to a circle having a radius R having a center position C of the attribute information (C, R) notified from the notifying unit as a center point, the providing unit providing delivery information of balloon data corresponding to at least one piece of attribute information (C, R) judged to belong thereto to the user station.

Accordingly, a shop can push, for example, discount information to a user station lying in a plane, which promote the sales and improve the effect of attracting customers to the shop.

The present invention still further provides a server system equipped with a user station which can position a position, a direction of movement and a quantity of movement of its own on two-dimensional planes, the server system comprising a database for holding a plurality of balloon data elements in which each of a plurality of two-dimensional plane data elements having attribute information (C, R) on two-dimensional planes is related with each piece of delivery information relating to the two-dimensional planes, a notifying unit for receiving a measurement start position L1 of the user station, and notifying the user station of attribute information (C, R) on the measurement start position L1 and a plurality of two-dimensional planes corresponding to a plurality of two-dimensional plane data elements within a predetermined distance, and a providing unit, when the user station notified of attribute information (C, R) judges that a measurement end position L2 of the user station obtained on the basis of the measurement start position L1, the direction of movement and the quantity of movement belongs to any one of two-dimensional planes determined on the basis of the attribute information (C, R), the providing unit providing delivery information on balloon data corresponding to plural pieces of attribute information (C, R) judged to belong thereto to the user station.

Accordingly, it is possible to decrease the frequency of positioning, and he loads on the network and of the positioning required at the time of positioning. Additionally, it is possible to decrease the packet charge required at the time of successive positioning, it becomes thus easy for the user station to receive the information push delivery service.

The notifying unit may predict a self-predicted position (L1-a, L1-b, L1-c) of the user station on the basis of a measurement start position L1 of the user station, and notify of attribute information (C, R) on a plurality of two-dimensional planes existing around the self-predicted position (L1-a, L1-b, L1-c). The notifying unit may adjust a range of the attribute information according to the number of the two-dimensional plane data elements with a predetermined number. Since a measured position can be obtained on not the server system's side but the user station's side, the frequency of transmission and reception of positioning data over the network can be decreased, the load on the network can be largely diminished, and transmission and reception of data can be sped up using the load.

The database may comprise a three-dimensional plane data holding unit for relating a position C and a range R of each of the plural three-dimensional planes with each type of the delivery information, and holding them, and a delivery information holding unit for holding delivery information of the plural three-dimensional planes. The database may comprise a delivered information holding unit for relating an identifier of the user station, an identifier of each of the plural three-dimensional planes, and information representing whether information has been delivered or not with respect to the identifier of the user station to one another, and holding them. When the user station transmits a measured position of its own to the server system on the basis of a three-dimensional space range obtained by dividing a three-dimensional space and a service to be provided in the three-dimensional space range, service contents corresponding to the measured position is provided to the user station.

The present invention still further provides a user station comprising a positioning unit for positioning a latitude, a longitude, an altitude, an azimuth and a tilt angle specifying each of a measurement start position L1, a measurement end position L2 and movement information including a direction of movement and a quantity of movement of the user station in push delivery space ranges, a transmitting unit for transmitting ameasurement start position L1 positioned by the positioning unit to the system's side, a receiving unit, when data of at least one kind of push delivery space range belonging to a predetermined radius having the measurement start position L1 transmitted from the transmitting unit as a center point is extracted on the system's side, the receiving unit receiving attribute information (C, R) including a position C and a range R of at least one extracted three-dimensional space range notified from the system's side, a pre-reading process unit for judging whether the user station belongs to the three-dimensional space range on the basis of the attribute information (C, R) received by the receiving unit from the system's side, and a self-predicted position (L1-a, L1-b, L1-c) predicted by the user station by calculating movement information positioned by the positioning unit, and a confirming unit, when the pre-reading process unit judges that the user station belongs to the three-dimensional space range, the confirming unit comparing a corrected position obtained by correcting a measurement end position L2 of the user station positioned by the positioning unit with at least one three-dimensional space range received by the receiving unit to confirm that the user station belongs to the three-dimensional space range.

Accordingly, the user station can know how far and in which direction the user station has moved on the basis of its own state (position, azimuth, tilt angle, angle of roll, pitch angle).

The positioning unit may obtain position information using a global positioning system, and the direction of movement and the quantity of movement using an azimuth sensor measuring an azimuth, a tilt sensor measuring a tilt angle from horizon and a gyro sensor integrating data relating to tilt angles and outputting a result. Accordingly, the user station itself can recognize its own measured position, whereby advertisement information is automatically pushed from a plurality of push delivery planes.

The pre-reading process unit may judge whether a predicted position of the user station belongs to a spherical range having movement information including the direction of movement and the quantity of movement as a center position C, and a range of the attribute information (C, R) as a radius R. Accordingly, the user station can predict and pre-read a delivery plane position, and it is possible to manage whether information has been delivered or not on each plane for each user station, thus redundant information delivery can be avoided.

The present invention still further provides a user station comprising a positioning unit for positioning a measurement start position L1, a measurement end position L2 and movement information including a direction of movement and a quantity of movement of the user station on two-dimensional planes,
a transmitting unit for transmitting a measurement start position L1 positioned by the positioning unit to the system's side, a receiving unit for receiving attribute information (C, R) on at least one two-dimensional plane predicted on the system's side with respect to the measurement start position L1 transmitted from the transmitting unit, a pre-reading process unit for judging whether the user station belongs to the two-dimensional plane on the basis of the attribute information (C, R) received by the receiving unit and self-predicted position (L1-a, L1-b, L1-c) predicted by the user station by calculating movement information positioned by the positioning unit, and a confirming unit for confirming that the user station belongs to at least one two-dimensional plane received by the receiving unit on the basis of a result of judgement by the pre-reading process unit.

Accordingly, each shop can place an advertisement for a group of customers limited to a specific age, sex or type of occupation, a public institute can transmit desired information to specific users selected from a lot of users, for example.

The present invention still further provides an information providing service system delivering information to a user station comprising a database for holding a plurality of balloon data elements in which each of plural pieces of push delivery space range information is related with each piece of delivery information including various information or service information to be provided in the push delivery space ranges, and a transmitting unit for transmitting at least one of the plural pieces of push delivery space range information on the basis of position information transmitted from the user station.

Accordingly, it is possible to decrease the frequency of positioning, the loads of the network and the server, and the packet charge.

The present invention still further provides a user station receiving information from a delivering system delivering information comprising a recording unit for recording plural pieces of push delivery space range information received from the delivering system on the basis of position information on the user station, and a control unit for requesting the delivering system for delivery when detecting that the user station is present in a three-dimensional space indicated by the push delivery space range information.

Accordingly, the frequency of positioning can be decreased, and pinpoint push delivery of contents such as a shop advertisement or the like becomes possible.

The present invention still further provides a method for providing a virtual three-dimensional space in an information providing service system which relates virtual three-dimensional space information corresponding to a real three-dimensional space with provided information or relating information of the provided information of a first user, store them, and provides information relating to position information on a second user who desires to be provided information to the second user, the method comprising the steps of dividing beforehand the virtual three-dimensional space information into plural pieces of virtual three-dimensional space information, selecting at least one virtual three-dimensional space corresponding to a real three-dimensional space desired by the first user who desires to provide information from among the plural pieces of divided virtual three-dimensional space information, and presenting a charge corresponding to a selected virtual three-dimensional space.

Since a range of the virtual three-dimensional space information can be changed, it is thus possible to decrease the range in the heart of a town, or increase the range in the suburbs. Accordingly, it is possible to change the density of service contents according to a service area.

Preferred features of the present invention will now be described, purely by way of example, with reference to the accompanying drawings in which:-

FIG. 1 is a diagram showing a structure of a push delivery service providing system according to an embodiment of this invention;

FIG. 2 is a diagram schematically showing an arrangement of buildings in a space;

FIG. 3 is a diagram showing an image of three-dimensional space ranges of balloon data according to the embodiment of this invention;

FIG. 4 is a diagram for illustrating balloon data according to the embodiment of this invention;

FIGS. 5(a) through 5(h) are diagrams showing examples of three-dimensional space range data according to the embodiment of this invention;

FIG. 6 is a diagram for illustrating a push delivery service providing method according to the embodiment of this invention;

FIG. 7 is a diagram showing a structure of a data center according to the embodiment of this invention;

FIG. 8(a) is a diagram showing an example of a delivery plane data format according to the embodiment of this invention;

FIG. 8(b) is an example of a data format to be stored in a server system;

FIG. 8(c) is a diagram showing an example of delivered information data according to the embodiment of this invention;

FIGS. 9(a) and 9(b) are diagrams for illustrating a change of the radius of a pre-reading plane according to the embodiment of this invention;

FIG. 10 is a block diagram of a user station according to the embodiment of this invention;

FIG. 11 is a diagram for illustrating a decrease of the frequency of positioning according to the embodiment of this invention;

FIG. 12 is a flowchart for illustrating a pre-reading process method by prediction according to the embodiment of this invention;

FIG. 13 is a diagram showing an example of a data format for transmitting/receiving position information according to the embodiment of this invention;

FIG. 14 is a diagram showing an example of a data format for pre-reading area request and notification according to the embodiment of this invention;

FIG. 15 is a flowchart for illustrating a process of adjusting the radius of a delivery plane according to the embodiment of this invention;

FIG. 16 is a diagram showing an example of a data format for push delivery request, delivery and acknowledgement according to the embodiment of this invention;

FIG. 17 is a flowchart for illustrating a process of registering a contents category according to the embodiment of this invention;

FIG. 18 is a flowchart for illustrating a pre-reading process method by measurement according to the embodiment of this invention;

FIGS. 19(a) and 19(b) are diagrams for illustrating an operation performed when a prediction plane contacts with a plurality of push delivery planes;

FIG. 20 is a diagram showing a first example of HotSpot service according to the embodiment of this invention;

FIG. 21 is a diagram showing a second example of HotSpot service according to the embodiment of this invention;

FIG. 22 is a diagram showing a third example of HotSpot service according to the embodiment of this invention;

FIG. 23 is a diagram showing a fourth example of HotSpot service according to the embodiment of this invention; and

FIG. 24 is a diagram for illustrating filtering of delivery information according to the embodiment of this invention.

Hereinafter, description will be made of embodiments of the present invention with reference to the drawings.

(A) Description of an Embodiment of the Invention

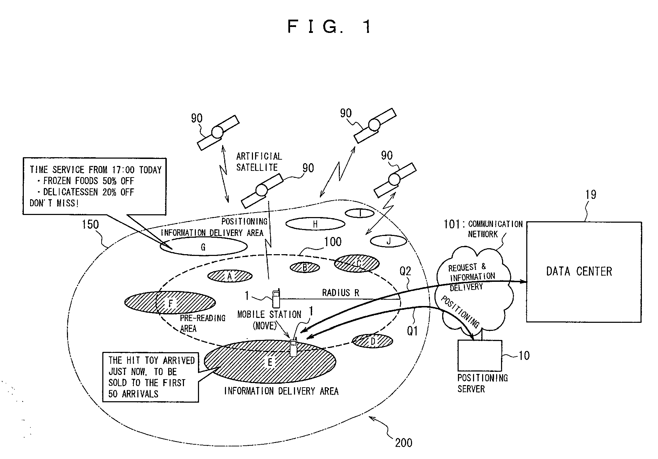

FIG. 1 is a diagram showing a structure of

push delivery service providing system according to an embodiment of this invention. A push delivery service providing system 200 shown in FIG. 1 delivers information to a mobile station (user station) 1. The push delivery service providing system 200 provides a push/pull service along with services of telephone, mail, access to a Web page, etc. to the mobile station 1. The push delivery service providing system 200 is operated by an aggregation of an administrator of a mobile communication system, a manufacturer manufacturing the mobile station 1 used for the mobile communication system and the like, for example.

The mobile station 1 shown in FIG. 1 positions a measurement start position (a position before starting to move) L1 and a measurement end position (a position after starting to move) L2 of its own in push delivery areas A through J to be described later, and transmits/receives data to/from a data center 19 over a communication network 101.

(1) Description of Push Delivery Service Providing System 200

(1-1) Application of Push Delivery Service

The push delivery service is well known, where the data center 19 (a server system: a plurality of servers joined together, which have a plurality of functions) managed by an administrator provides various information to the mobile station 1 in which JAVA (registered trademark of Sun Microsystems) specialized to receive the service is installed. Well known examples of application of the service are push delivery (in concrete, mail transmission) of information on goods, services, advertisements, public services and the like of enterprises, shops, public institutions and the like to the mobile station 1, or push delivery of delivery information or business information to specific users in an enterprise.

(1-2) Push Delivery Service Providing Method in Push Delivery Service Providing System 200

(1-2-1) Push Delivery Area Pre-reading Process Method

A push delivery service providing method of the push delivery service providing system 200 includes a method in which the mobile station 1 predicts by itself that the mobile station 1 enters into a push delivery area existing around itself (hereinafter referred as a pre-reading process method). By using the pre-reading process method, the frequency of positioning performed by each of the mobile stations 1 is decreased.

(1-2-2) Contents of Service Based on Three-dimensional Space Range

When the push delivery providing system 200 provides an information providing service, the data center 19 before hand relates a three-dimensional space range with a service to be provided in this three-dimensional space range, and store them. This held data will be now described in detail.

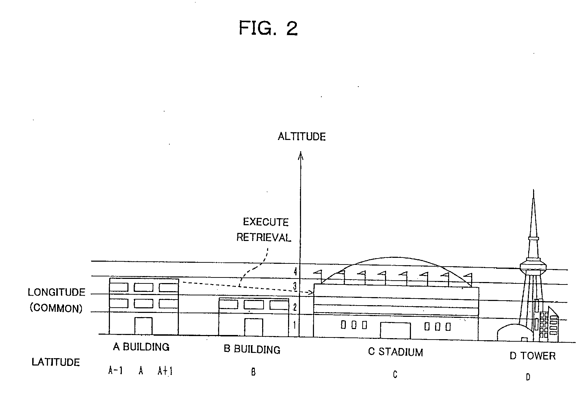

FIG. 2 is a diagram schematically showing an arrangement of buildings in a space. Four buildings shown in FIG. 2 are located at the same longitude and different latitudes. For example, A building is located in a range at latitudes A-1 to A+1, whereas center positions of B building, C stadium and D tower are at latitudes B, C and D, respectively. Incidentally, units of the longitude and latitude are ° (degree), '(minute) and " (second). These are common in the following description. The user on the third floor of A building obtains a station's position of the mobile station 1 using the mobile station 1, and transmits an obtained measured position to the data center 19. The data center 19 holds data in which each of three-dimensional space ranges is related with a service to be provided in the three-dimensional space range as balloon data (also referred as bubble data).

"Balloon (bubble)" signifies three-dimensional space range information in a specific space in a three-dimensional space, just like a foam floating in a three-dimensional space, by which a real building is duplicated. A term of "balloon" generally reminds a sphere. Here, a balloon is not limited to a sphere, but may be a space obtained by dividing a three-dimensional space.

The data center 19 holds plural kinds of balloon data in which data of each of a plurality of push delivery areas A through J having attribute information (C, R) including positions C and ranges R of the plural push delivery areas A through J is related with each of plural pieces of delivery information including various information or service information to be provided in the plural delivery areas A through J.

According to the push delivery service providing method of this invention, the data center 19 holds a plurality of balloon data elements, the mobile station 1 positions ameasurement start position L1 and a measurement end position L2 of the mobile station 1 in the push delivery areas A through J and transmits/ receives data to/from the data center 19 over the communication network 101, and the mobile station 1 judges whether the mobile station 1 belongs to the push delivery area A, B, ..., or J on the basis of attribute information (C, R) transmitted from the data center 19 and a self-predicted position (L1-a, L1-b, L1-c) predicted by the mobile station 1 itself.

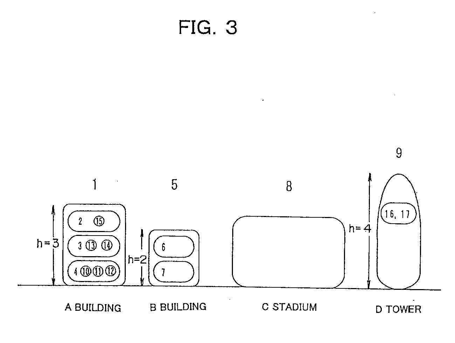

FIG. 3 is a diagram showing images (information balloons) of three-dimensional space ranges of balloon data according to the embodiment of this invention. Information balloons 1 through 17 shown in FIG. 3 represent images corresponding to the buildings A through D shown in FIG. 2. In each of these information balloons 1 through 17, three-dimensional space range information including the latitude, longitude and altitude of an object, and a balloon radius is related with information on goods, service or the like to be provided in each building.

The information balloons 1, 5, 8 and 9 shown in FIG. 3 represent A building, B building, C stadium and D tower, respectively. The information balloon 1 has information balloons 2, 3 and 4 in its inside. The information balloons 2, 3 and 4 represent images corresponding to floors of A building. Numbers (balloon numbers) 1 through 17 shown in FIG. 3 are identification numbers given to the information balloons shown in FIG. 2. "Balloon radius" represents a radius of an information balloon when the balloon is a sphere. When the information balloon is an ellipsoid, balloon radius represents the major axis and the minor axis of the balloon, it is thus necessary to set values corresponding thereto. When the information balloon is a quadrangular prism in conformity with a capacity of the building, balloon radius represents a width or the like of the quadrangular prism.

Accordingly, a plurality of balloon data elements is configured by relating each of a plurality of three-dimensional space range data elements having attribute information (C, R) relating to three-dimensional space ranges with delivery information attached to each of the three-dimensional space ranges.

In these buildings, goods such as toys and the like, services by restaurants are provided. Namely, an information balloon in which a three-dimensional space range is related with a service or the like to be provided in the three-dimensional space range is beforehand generated in the data center 19.

The mobile station 1 positions a measured position specified by the latitude, longitude and altitude of the mobile station 1 itself, and transmits measured position data obtained by converting the measured position into data to the data center 19. When receiving the measured position data, the data center 19 retrieves a service to be provided in a three-dimensional space range containing the measured position of the mobile station 1 in held data in which each three-dimensional space range is beforehand related with a service to be provided in the three-dimensional space range. The data center 19 transmits a providing service obtained by the retrieval to the mobile station 1.

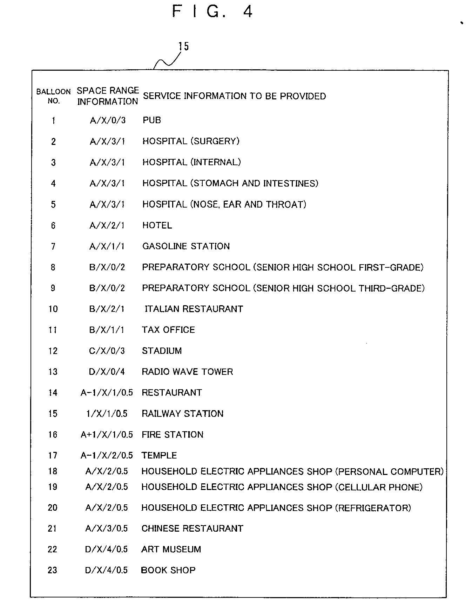

FIG. 4 is a diagram for illustrating balloon data according to the embodiment of this invention. Balloon numbers 1 through 17 among balloon numbers 1 through 23 shown in FIG. 4 correspond to the balloon numbers 1 through 17 shown in FIG. 3. Data indicated by "A/X/0/3" represents latitude, longitude, altitude and balloon radius. For example, the balloon number 2 corresponds to the third floor of A building shown in FIG. 3. The data center 19 converts the data into latitude A (unit : degree), longitude X (unit: degree), altitude (corresponding to 45m) and balloon radius 1, and holds them. Incidentally, "altitude 0" represents that the building contacts with the ground, whereas "altitudes 1, 2 and 3" represent values corresponding to true values (for example, 15m, 30m and 45m). Balloon radii 0.5 through 4 are values corresponding to true values (for example, 1m through 8m). Here, "balloon radius" represents a radius when the information balloon is a sphere.

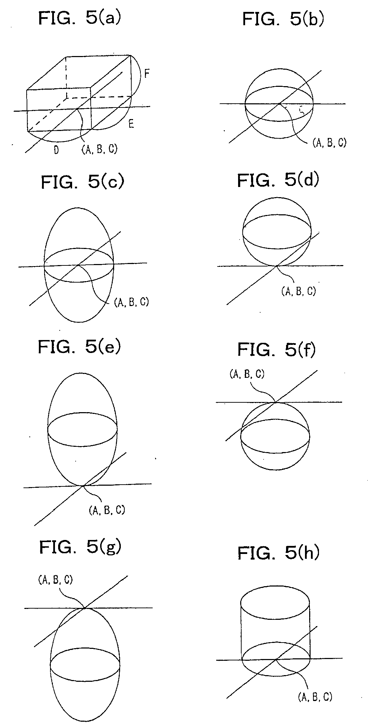

FIGS. 5(a) through 5(h) are diagrams showing examples of three-dimensional space range data according to the embodiment of this invention. (A, B, C) shown in these drawings is a center position of an information balloon. The push delivery service providing system 200 employs a sphere shown in FIG. 5(b). A range of an information balloon displayed by the data center 19 may be changed according to the contract fee or the like, so that an enterprise or a shop may change the balloon radius, and use the balloon as an advertising measure.

When the information balloon is an ellipsoid, the balloon radius is defined by its major axis and minor axis. When the information balloon is a quadrangular prism in conformity with a capacity of the building, the balloon radius is defined by a width or the like of the quadrangular prism. The center position of an information balloon is similar. D, E and F shown in FIG. 5(a) represent a latitude width, a longitude width and an altitude width. For example, values of 20m, 20m and 10m are beforehand held in the data center 19.

When the mobile station 1 pulls information, the mobile station 1 transmits its own measured position to the data center 19. Service contents corresponding to the measured position are provided to the mobile station 1 on the basis of each three-dimensional space range and a service to be provided in the three-dimensional space range.

According to the push delivery service providing method of this invention, the administrator beforehand divides the three-dimensional space range into a plurality of three-dimensional space ranges in order to provide services, relates each of the divided three-dimensional space ranges with a service to be provided in the three-dimensional space range, and stores them in a server (not shown) provided in the data center 19. When the data center 19 receives a measurement end position L2, which is established by the mobile station 1, from the mobile station 1, the data center 19 transmits contents information indicating a service to be provided in a three-dimensional space range containing the received measurement end position L2 to the mobile station 1.

In the push delivery service providing system 200, the data center (server system) 19 holds attribute information (C, R) containing area positions C and ranges R of a plurality of push delivery areas A through J. Each of the mobile stations 1 is connected to the data center 19 over the communication network 101. The mobile station 1 can predict by itself that the mobile station 1 belongs to a push delivery area A, B, ... or J by comparing attribute information (C, R) containing a position C and a range R of a push delivery area A, B, ..., or J received by the mobile station 1 itself with a self-predicted position (L1-a, L1-b or L1-c) predicted by the mobile station 1 itself. Accordingly, the mobile station 1 can predict its own position without frequently measuring a space position of the mobile station 1. The number of times of transmission and reception of the measured data between the mobile station 1 and a positioning server 10 over the communication network 101 is decreased, whereby the load on the communication network 101 is largely reduced, and transmission/reception of data can be sped up using the load.

(1-3) Service Method Applying Information Balloon to Push Delivery Service

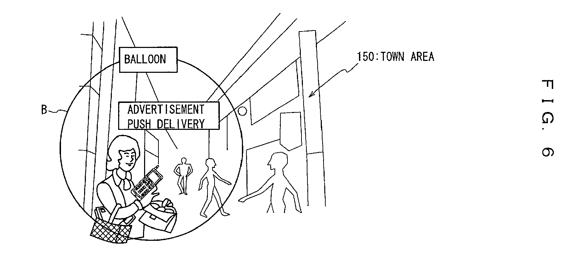

FIG. 6 is a diagram for illustrating a push delivery service providing method according to the embodiment of this invention. Balloon B shown in FIG. 6 is a spherical balloon representing the foremost shop among a number of shops. In the world of a database in the data center 19, balloon B contacts with a user with the mobile station 1. In other words, FIG. 6 shows an synthesized image in which a real space where a central street and shops on the both sides thereof and balloon B are overlapped on each other.

In concrete, data of the latitude, longitude and altitude of a balloon held in the server in the data center 19 is overlapped with data of the latitude, longitude and altitude of the mobile station 1. When the push delivery service providing system 200 push-delivers an advertisement of each shop to the mobile station 1, the data center 19 extracts a service to be provided in a balloon in the overlapped portion. For this, conceptually, it looks as if a moving user and a balloon contact with each other, and the user automatically receives an advertisement contained in the balloon contacting with the user. Advertisements using the balloons enable push delivery of advertisements of enterprises or shops to the mobile station 1, and push delivery of business information to specific users in an enterprise, as described in (1-1). This push delivery function is called HotSpot (applied trademark of NTT communications Co.) function.

(1-4) Description of HotSpot Service

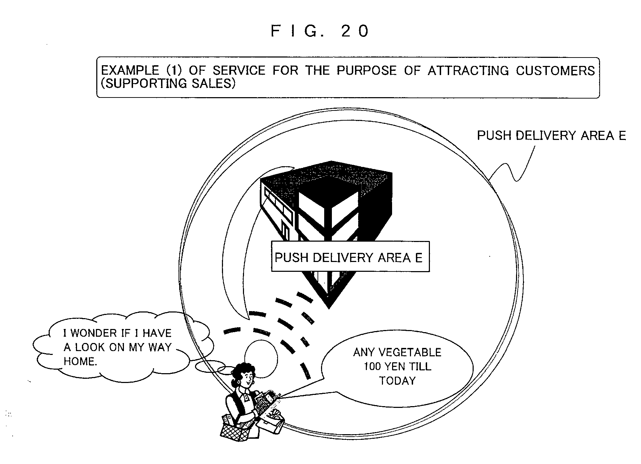

FIG. 20 is a diagram showing a first example of the HotSpot service according to the embodiment of this invention. A push delivery area E shown in FIG. 20 pushes, for example, information about a bargain sale of goods to the mobile station 1 in the area. The administrator can thereby support sales in each shop.

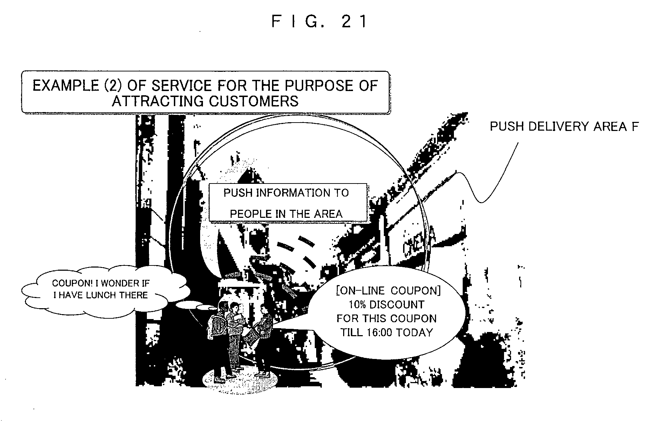

FIG. 21 is a diagram showing a second example of the HotSpot service according to the embodiment of this invention. A push delivery area F shown in FIG. 21 pushes discount information to the mobile station 1 in the area, whereby the shop can promote the sales and improve an effect of attracting customers. As this, by pushing information in the push delivery area, each shop can attract customers.

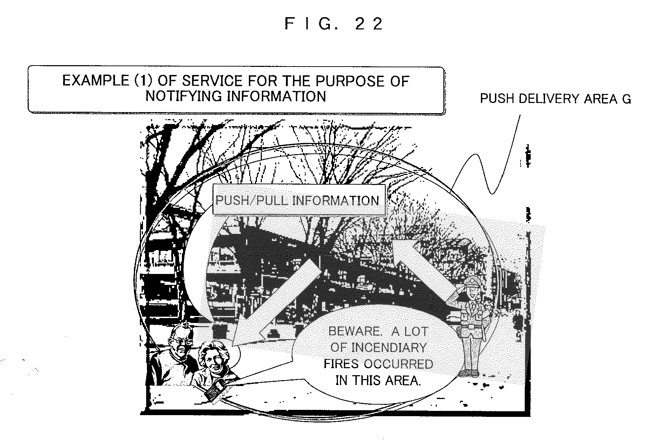

FIG. 22 is a diagram showing a third example of the HotSpot service according to the embodiment of this invention. A push delivery area G shown in FIG. 22 pushes crime prevention information to the mobile station 1. It is thereby possible to distribute information from a public institution in one direction.

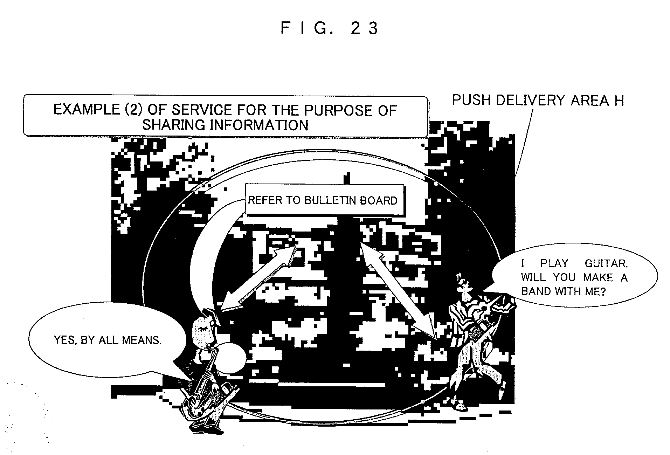

FIG. 23 is a diagram showing a fourth example of the HotSpot service according to the embodiment of this invention. A push delivery area H shown in FIG. 23 has a bulletin board function, whereby a number of unspecific users can commonly have information about, for example, a want ad of a music band for members or an application thereto.

(2) Structure of Push Delivery Service Providing System 200

The push delivery service providing system 200 shown in FIG. 1 provides the push delivery service using information balloons to the mobile station 1. The push delivery service providing system 200 holds delivery information (for example, contents information) from an enterprise or a shop for each information push delivery area and delivers it to the mobile station 1, while pulling information from the mobile station 1 to connect a call from the mobile station 1. The push delivery service providing system 200 comprises, for example, four GPS satellites (artificial satellites) 90, a town area 150 in which radio waves from the GPS satellites 90 can be received, the communication network 101 transmitting/receiving data to/from base stations, the positioning server 10 connected to the communication network 101, the data center 19 connected to the communication network 101, the mobile station 1, and a number of other mobile stations 1 although not shown.

(2-1) Town Area 150

The town area 150 shown in FIG. 1 represents a town such as Shinjuku, Shibuya or the like, a range (size) of which is set according to the design of a sending electric power value, the business plan, etc. For example, a range of the town area 150 is set small in the hear of a city, or set large in the suburbs. Namely, when the space is divided, the density can be changed according to whether it is in the city or in the suburbs. In the town area 150 shown in FIG. 1, a plurality of the push delivery areas A through J are displayed.

(2-2) Push Delivery Areas A-J

The push delivery areas A through J are areas in which various information is pushed to the mobile station 1. In concrete, when determining that the mobile station 1 is located in any one of these push delivery areas A through J, the push delivery service providing system 200 pushes, for example, information on news or advertisements of various shops in the vicinity of the present position of the mobile station 1 to the mobile station 1.

An example of push delivery area setting will be described in detail.

The data center 19 divides the town area 150 indicated by dot-dash line in FIG. 1 into a plurality of the push delivery areas A through J. Incidentally, the shape of the plural push delivery areas A through J may be not only a circle having a desired radius, but also an ellipse, a polygon, a combination of parts of these shapes, or a solid shape such as a sphere or a column. The radius of the area may be variously set according to its area (a distance from the center of the city), a contract fee, an application of an advertisement, etc.

In each of the plural push delivery areas A through J, an enterprise, a shop or the like pays the contract fee to the data center 19, and transmits an advertisement of its own to users. For example, a shop belonging to the push delivery area G transmits an advertisement that the shop starts a time service from 17:00 to the mobile station 1 entering to the zone of the push delivery area G. Or, another shop belonging to the push delivery area E can advertise that a hit television game has just arrived.

Accordingly, each shop can directly put its own advertisement to people passing through the neighborhood of the shop, on foot or in vehicles, thus can provide information instantaneously as compared with advertisements in broadcasting media, or papers such as newspapers, magazines and the like.

Additionally, it is possible to provide carefully thought out services such as a time service and the like. Further, each shop can limit customers of specific ages, specific sex, specific types of occupation to put an advertisement to them, individually and specifically. The public institutions can transmit desired information to specific users selected among a number of users.

(2-3) GPS satellites 90

The four GPS satellites 90 shown in FIG. 1 are placed on a plurality of circular orbits at an altitude of 20,000 kilometers to cover the town area 150 as an area ready for receiving. Each of the GPS satellites 90 has an accurate atomic clock, and transmits data including a transmission time of a radio wave and an ID (identification) of the satellite. The mobile station 1 receives a radio wave from each of the GPS satellites 90 in the town area 150, and calculates a distance between the GPS satellite 90 and a receiving point of the mobile station 1 on the basis of the reception time. In concrete, the mobile station 1 can measure its own position (a position of the mobile station 1 itself), a direction of movement and a quantity of movement of its own in a three-dimensional space range of, for example, a sphere, an ellipsoid, a cube or a rectangular parallelopiped, thereby accurately positioning the latitude, longitude, altitude and the like.

Here, "a direction of movement" signifies an azimuth or a direction on the two-dimensional plane. In a three-dimensional space, "a direction of movement" signifies an azimuth or a direction to which an elevation angle or a depression angle is added. Further, "a quantity of movement" signifies a distance for which the mobile station 1 has actually moved. According to this embodiment, the user moves without loitering in the same place.

Measurement is made by the mobile station 1 by calculation, using an application provided to the mobile station 1. Since a quantity of this calculation is large, the mobile station 1 calculates by itself, not transmitting data for the calculation therefrom to the communication network 101. This largely reduces the load of the communication network 101.

A time received by the mobile station 1 contains an error. This error is caused by that the accuracy of a clock of the mobile station 1 is inferior to that of the atomic clock of the GPS satellite 90, and that the radio wave degrades while passing through the atmosphere. For this, it is necessary to correct an error contained in position data, and the mobile station 1 transmits minimum data of position data obtained from a distance to the positioning server 10.

(2-4) Positioning Server 10

The positioning server 10 receives position data transmitted from the mobile station 1, corrects an error having generated in the position data, holds the corrected position data of the mobile station 1, and tracks the position of each of the mobile stations 1. The positioning server 10 receives a pseudo file transmitted from each of the mobile stations 1, and holds this file.

(2-5) Communication Network 101

The communication network 101 is configured with a radio communication network and a wire communication network. The radio communication network has, for example, a radio base station, a base station controller, a higher rank switching center, a lower rank switching center, etc. , although not shown. The wire communication network has, for example, a subscriber exchange, a higher rank exchange, a gateway switching center installed at a connecting point with a public network or another telephone service carrier.

(2-6) Data Center 19

The data center 19 holds the above balloon data, functioning as a server system. A Plurality of balloon data elements held by the data center 19 are obtained by relating data of each of a plurality of push delivery areas A through J having attribute information (C, R) containing a position C and a range R of the push delivery area A, B, ..., or J with delivery information containing various information or service information to be provided in the push delivery area A, B, ..., or J.

The data center 19 is connected to the communication network 101 to perform various processes and operations on the basis of position data transmitted from each of the mobile stations 1. In concrete, when the mobile station 1 enters into a push delivery area, the data center 19 receives a push delivery request, and delivers, for example, contents information to the mobile station 1.

Data center 19 holds and manages balloon data in which an object (for example, an actually existing thing such as a building, each floor of a building, a signboard or the like, or a thing moving in a space) is related with three-dimensional space range information (three-dimensional occupation information or space region information) configured with altitude, longitude, altitude and balloon radius to be described later of a desired space.

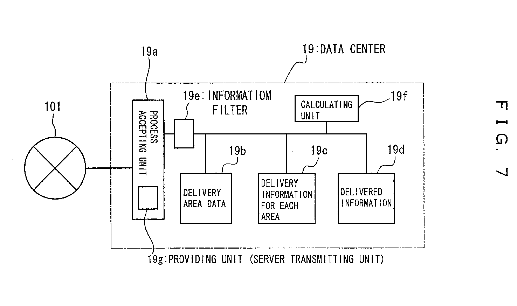

FIG. 7 is a diagram showing a structure of the data center 19 according to the embodiment of this invention. Described here is an example where one server system having the following functions configures the data center 19. Incidentally, the functions of the data center 19 may be distributed in the communication network 101.

The data center 19 shown in FIG. 7 holds a plurality of balloon data elements obtained by relating data of each of a plurality of push delivery areas A through J having attribute information (C, R) containing center positions C and radii R of the spherical push delivery areas A through J with each of plural pieces of delivery information containing various information or service information to be provided in the push delivery areas A through J. Various information signifies facility information relating to buildings, which are, for example, information on buildings, Tokyo Tower, shops in these buildings, information on stations of transportation facilities, etc. Service information signifies information relating to the facility information, which are, for example, information on products of an enterprise in a building of the enterprise, information on the open time of Tokyo Tower, menus of restaurants, eating places and the like, information on time tables of railway stations, etc. In the following description, these are common unless specifically mentioned.

The data center 19 is communicable with the mobile station (not shown) 1. The mobile station 1 positions a position, a direction of movement and a quantity of movement of its own in spherical push delivery areas A through J with GPS satellites, an azimuth sensor and a gyro sensor, and transmits/receives data to/from the data center 19 over the communication network 101.

The data center 19 comprises a process accepting unit (server receiving unit) 19a, a delivery area data holding unit (three-dimensional space range data holding unit) 19b, a delivery information holding unit (delivery information holding unit for each database or area) 19c, a delivered information holding unit (delivered information holding unit) 19d, an information filter 19e, a calculating unit 19f, and a providing unit (transmitting unit or server transmitting unit) 19g.

The process accepting unit 19a receives a measurement start position L1 specified on the basis of a latitude, longitude, altitude, azimuth and inclination angle of the mobile station 1 transmitted from the mobile station 1, and movement information containing a direction of movement and a quality of movement of the mobile station 1. The process accepting unit 19a is connected to the communication network 101 to receive a push delivery request message transmitted from the mobile station 1 when the mobile station 1 enters into a push delivery area. The process accepting unit 19g has the providing unit 19g transmitting data to each of the mobile stations 1.

The providing unit 19g receives one piece of attribute information selected by the mobile station 1 from among plural pieces of attribute information transmitted from the providing unit 19g itself, and provides delivery information of balloon data corresponding to the attribute information to the mobile station 1.

The providing unit 19g transmits attribute information on one or plural push delivery areas A through J existing around the measurement start position L1 to the mobile station 1 on the basis of a self-predicted position (L1-a, L1-b, L1-c) calculated by the calculating unit 19f to be described later. This function is accomplished by an optical fiber, and an optical transmitting-receiving unit or an electric-optical mutual converting unit, which are not shown, in cooperation.

The delivery area data holding unit 19b relates positions C and ranges R of a plurality of three-dimensional space ranges with types of delivery information, respectively, and holds them. In concrete, the delivery area data holding unit 19b relates a delivery area ID for identifying an delivery area with attribute information (C, R) on the delivery area, and holds them. Attribute information (C, R) is delivery area position information representing the center position of a delivery area, or the like, for example. Incidentally, this function is accomplished by an information record medium such as a hard disk or the like.

The push delivery service providing system 200 of this invention is a delivery system distributing information to the mobile station 1, which comprises a delivery information holding unit (database) 19c holding a plurality of balloon data elements in which each piece of information relating to ranges of a plurality of push delivery areas A through J (representing push delivery space ranges information; representing attribute information (C, R) including positions C and ranges R of the push delivery areas A through J, for example) is related with each piece of delivery information including various information or service information to be provided in the push delivery areas A through J, and a providing unit (transmitting unit or server transmitting unit) 19g transmitting at least not less than one piece of information relating to ranges of the plural push delivery areas A through J to the mobile station 1.

Whereby, it is possible to decrease the number of times of measurement, decrease the loads of the communication network 101 and the positioning server 10, and decrease the packet charge.

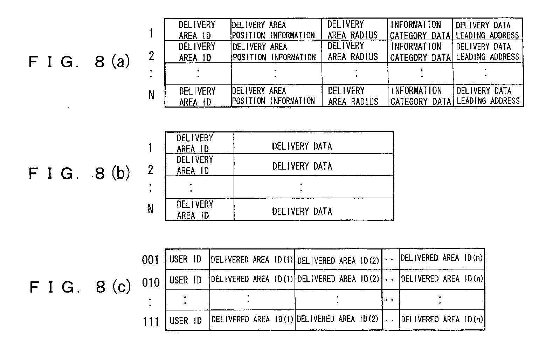

FIG. 8(a) is a diagram showing an example of a delivery area data format according to the embodiment of this invention, showing a data format to be stored in the server or the like. In the delivery area data shown in FIG. 8(a), a delivery area ID and a delivery area position information are related with various attribute data such as a delivery area radius (radius) representing a range of the area, information category data representing a type of information contents such as restaurant information, time service information or the like, and a delivery data leading address representing a place in which the delivery data is stored. Accordingly, the user can beforehand register to which degree of detail of data of a delivery area the user desires when the user requests the data center 19 to deliver the information of the delivery area using the mobile station 1.

Information category data is used to filter, thereby selecting information. Owing to the selection, the load of retrieving in one thousand data elements each time of access is avoided. The data is also used to change a radius. Whereby, unnecessary data is not transmitted and received between the mobile station 1 and the data center 19, so that the load of processing on the communication network 101 is largely reduced.

The delivery information holding unit 19c shown in FIG. 7 holds delivery information of a plurality of three-dimensional space ranges. In concrete, the delivery information holding unit 19c holds delivery information (contents) of each area, which functions as a database for holding balloon data. In the delivery information, delivery area IDs are related with delivery data (contents themselves) and held, as N (N representing an integer) delivery data elements, as shown in FIG. 8(b), for example. When the data center 19 receives a push delivery request transmitted when the mobile station 1 enters into a push delivery area, the data center 19 extracts a delivery area ID included in the request message, reads contents corresponding to the extracted ID from the delivery information holding unit 19c, and transmits them to the mobile station 1.

Namely, the delivery information holding unit 19c holds a plurality of balloon data elements in which data of each of a plurality of push delivery areas A through J having attribute information (C, R) including center positions C and radii R of the push delivery areas A through J is related with each of plural pieces of delivery information including various information or service information to be provided in the push delivery areas A through J.

The process accepting unit 19a, the providing unit 19g and the delivery information holding unit 19c function, in cooperation, as a notifying unit. The notifying unit (19a, 19c) receives a measurement start point L1 specified on the basis of a latitude, longitude, altitude, azimuth and tilt angle of the mobile station 1 transmitted from the mobile station 1, extracts data of one or plural push delivery areas A through J belonging to a radius R having the measurement start position L1 as the center from the delivery information holding unit 19c, and notifies the mobile station 1 of one or plural pieces of attribute information (C, R) including the center position C and the radius R of the extracted data of the one or plural push delivery areas A through J.

The notifying unit (19a, 19c) adjusts a range of the pre-reading position information within a predetermined number according to the number of three-dimensional space range data elements. When the shape of a three-dimensional space is other than spherical or circular, the notifying unit (19a, 19c) can define a range of the three-dimensional space using a distance other than the radius. In concrete, when the shape of the space is an ellipsoid, the notifying unit (19a, 19c) uses the major axis, extracts one or a plurality of three-dimensional space range data elements within a distance equivalent to the major axis from the measurement start position L1 of the mobile station 1 from the data base, and notifies the mobile station 1 of extracted one or plural pieces of attribute information (C, R). When the shape of the space is a cube, the notifying unit (19a, 19c) can define a distance which is a half of one side of each surface configuring six surfaces of the cube, or a distance which is a half of the opposite side of each surface, as the three-dimensional space range.

When receiving position information from the mobile station 1, the data center 19 extracts push delivery areas A through J within a distance beforehand registered by the user from the position information, and transmits , for example, the extracted push delivery area E to the mobile station 1.

In the mobile station 1 notified of attribute information (C, R) from the notifying unit (19a, 19c), a measurement end position L2 of the mobile station 1 is calculated from a measurement start position L1, and a direction of movement and a quantity of movement of the same. When it is judged that the measurement end position L2 belongs to any one of plural three-dimensional space ranges having positions C and ranges R included in attribute information notified from the notifying unit (19a, 19c) of the data center 19, delivery information of one or a plurality of balloon data elements corresponding to the judged one or plural pieces of attribute information (C, R) is provided to the mobile station 1.

Frequent data transmission between the mobile station 1 and the data center 19 as before is prevented, and data transmission can be sped up.

The delivery information holding unit 19d shown in FIGS. 7 and 8(c) relates a user ID, a plurality of area IDs (identifiers of three-dimensional space ranges) and delivered area IDs (information representing whether information has been already transmitted or not with respect to an identifier of each mobile stations 1) with one another, and holds them. A reason why the delivered information holding unit 19d holds data as to whether the delivery information has been already transmitted or not is to prevent double transmission of the same delivery information. Each mobile station 1 may return to a push delivery area that the mobile station 1 has passed through during its movement. In which case, a history relating to going-in and -out to the same push delivery area of the mobile station 1 is held, thereby preventing double delivery of information. When the mobile station 1 is on a boundary line of two areas, delivery information can be temporarily cached in the both areas. Further description will be made with reference to FIG. 8(c).

FIG. 8(c) is a diagram showing an example of delivered information data according to the embodiment of this invention. A plurality of delivered information data elements 001 through 111 shown in FIG. 8(c) are held correspondingly to the respective mobile stations having individual unique user IDs [001] through [111] so as to be managed. For example, a column of delivered area IDs (1), (2), ..., and (N) is provided for a mobile station 1 of the user ID [001]. The process accepting unit 19a writes and reads a flag representing whether the delivery information has been already delivered or not, thereby preventing information having been once push-delivered from being delivered plural times to the mobile station 1. Accordingly, the same information is prevented from being again displayed to the user. Incidentally, this delivered information can be cleared. For example, when the information is cleared at midnight or before dawn, it is possible to again deliver the information to the same mobile station 1.

The information filter 19e shown in FIG. 7 selects at least one of plural pieces of information such as the above delivery area data, the delivery information (contents), delivered information, etc., according to prior selection by user's will, or on the basis of an advertisement plan of an enterprise or a shop, and outputs it.

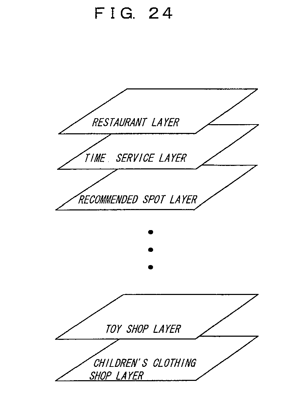

FIG. 24 is a diagram for illustrating filtering of delivery information (contents) according to the embodiment of this invention. With regard to the delivery information shown in FIG. 24, layers are assigned to respective information categories of restaurants, time service, recommended spots, toy shops, children's clothing shops, etc. The information center 19e selects a desired layer from among a number of layers according to a user's wish or an object of business of an enterprise or a shop, and transmits registered information in the selected layer to the user. Namely, the data center 19 changes and controls a position or radius of each information balloon to filter the information. For example, the data center 19 can deliver contents in number selected according to a capacity of the memory of the mobile station 1. When the number of contents is limited according to a contract fee of the user, the data center 19 can limit an information quantity to be transmitted.

The providing unit 19g predicts whether the mobile station 1 belongs to a three-dimensional space range or not on the basis of one or plural pieces of attribute information (C, R) selected by the mobile station 1 from attribute information (C, R) notified from the notifying unit (19a, 19c) to the mobile station 1, and a self-predicted position (L1-a, L1-b, L1-c) predicted by the mobile station 1 calculated from movement information including a direction of movement and a quantity of movement of the mobile station 1. When it is determined that the mobile station 1 belongs, the process accepting unit 19a compares a corrected position obtained by correcting the measurement end position L2 with the three-dimensional space range, thereby to confirm that the mobile station 1 belongs to the three-dimensional space range, and provides delivery information of balloon data corresponding to the delivery information to the mobile station 1 on the basis of a result of the confirmation.

When the mobile station 1 is notified of attribute information (C, R) from the notifying unit (19a, 19c) of the data center 19, it is judged in the mobile station 1 whether the measurement end position L2 of the mobile station 1 calculated from the measurement start position L1 specified on the basis of a latitude, longitude, altitude, azimuth and tilt angle of the mobile station 1 transmitted from the mobile station 1, and a direction of movement and a quantity of movement positioned by the mobile station 1 belongs to push delivery areas A through J existing inside a sphere having a radius R with the center position C of the attribute information (C, R) notified from the notifying unit (19a, 19c) being as the center. When it is judged that the the measurement end position L2 belong to the push delivery areas A through J, delivery information of balloon data corresponding to not less than one piece of attribute information (C, R) judged to belong is provided to the mobile station 1.

In other words, the notifying unit (19a, 19c) receives the measurement start position L1, extracts data of one or a plurality of push delivery areas A through J belonging to a radius R having the measurement start position L1 as the center point from the delivery information holding unit 19c, and notifies the mobile station 1 of one or plural pieces of attribute information (C, R) including the center positions C and the radii R of the data of the extracted one or a plurality of push delivery areas A through J. In the mobile station 1, it is judged whether the mobile station 1 belongs to the push delivery areas A through J on the basis of one or plural pieces of attribute information (C, R) selected from the attribute information (C, R) notified from the data center 19 and a self-predicted position. When it is judged that the mobile station 1 belongs to the areas A through J, the mobile station 1 positions the measurement end position L2, and transmits the measurement end position L2 to the data center 19.

The data center 19 compares a corrected position obtained by correcting the measurement end position L2 with each of the push delivery areas A through J to confirm that the mobile station 1 belongs to the push delivery area A, B, ..., or J, and provides various information or service information of balloon data corresponding to the delivery information to the mobile station 1 on the basis of a result of the confirmation.

Since the enterprise or shop can group users and manage them, the enterprise or shop can provide information of a higher value added to the users. Since the information is managed in layers, the data center 19 can adaptively change a quantity of information to be transmitted to the mobile station 1. Additionally, the enterprise or shop can originally set each delivery area, so that the enterprise or shop can beforehand select specific users, and deliver information by mail by grouping the users and managing them.

When the shape of the push delivery area is a circle (including when a sphere is projected on a plane, or when the push delivery plane is managed with a circle), the number of push delivery areas to be notified from the data center 19 to the mobile station 1 is limited, and a radius of a pre-reading area is determined according to the number of the push delivery areas A through J.

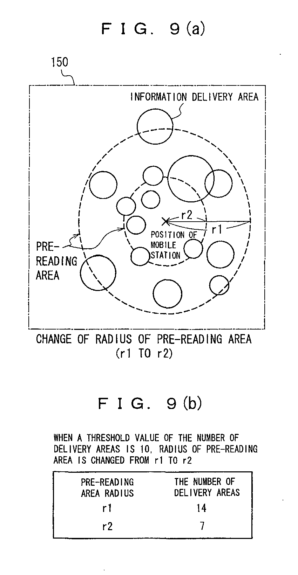

FIGS. 9(a) and 9(b) are diagrams for illustrating a change of a radius of a pre-reading area according to the embodiment of this invention. In a town 150 shown in FIG. 9(a), there are a number of push delivery areas (circles indicated by solid lines), and a position of the mobile station 1 indicated by a cross. A pre-reading area having a radius r1 and a pre-reading area having a radius r2 are shown by broken lines around the position of the mobile station 1 as the center (suppose r1 > r2). Each of relationships shown in FIG. 9(b) shows a relationship between a radius of a pre-reading area and the number of delivery areas that a circle having the radius can read. The circles having radii r1 and r2 can read 14 and 7 delivery areas, respectively, and allow the mobile station 1 to display them. When a threshold value of the number of delivery areas is predetermined to be 10, for example, the radius r1 is changed to the radius r2.

The above described is essential in this embodiment. Meanwhile, it is possible to provide a calculating function for predicting the position of the mobile station 1 to the data center 19, and use the calculating unit 19f for it. The calculating unit 19f calculates a self-predicted position (L1-a, L1-b. L1-c) predicted by the mobile station 1 itself on the basis of the measurement start position L1 and movement information received by the process receiving unit 19a. By providing this calculating function to the side of the communication network 101, transmission of only data relating to the position of the mobile station 1 suffices, which allows a reduction of the power consumption.

(2-7) Mobile Station 1

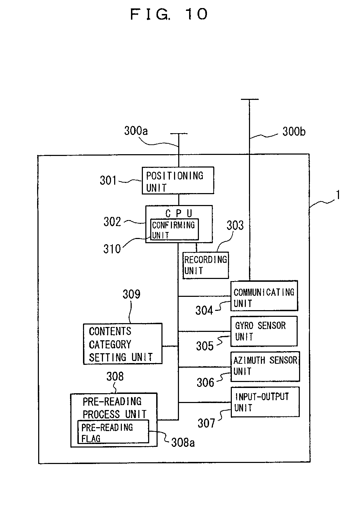

FIG. 10 is a block diagram showing the mobile station 1 according to the embodiment of this invention. The mobile station 1 shown in FIG. 10 has a positioning function for positioning a position (a measured position or a station's position; hereinafer referred as a measured position) in a three-dimensional space of the mobile station 1, along with a transmitting-receiving function for voice or data of a portable telephone, for example. The mobile station 1 comprises a positioning antenna 300a, a transmitting-receiving antenna 300b, a positioning unit 301, a CPU (Central Processing Unit) 302, a recordingunit (storing unit) 303, a communicating unit (transmitting-receiving unit) 304, a gyro sensor unit (3D gyro sensor unit) 305, an azimuth sensor unit 306, an input-output unit 307, a pre-reading process unit (pre-reading process application) 308, and a contents category setting unit (application for setting a delivery information category) 309.

The transmitting-receiving antenna 300b transmits and receives radio signals.

The communicating unit 304 modulates voice or data, and transmits radio signals, while demodulating radio signals into voice and data, which has a data receiving function and a data transmitting function. When attention is paid to the transmitting function, the communicating unit 304 transmits the above latitude, longitude, altitude, azimuth and tilt angle positioned by the positioning unit 304 to the data center 19 in order to specify space positions such as the measurement start position L1, the measurement end position L2, and the like. When attention is paid to the receiving function, the communicating unit 304 receives attribute information (C, R) in one or plural three-dimensional space ranges predicted by the data center 19 on the basis of the measurement start point L1 and the measurement end position L2.

The CPU 302 is for various operations, in which a ROM (Read Only Memory) and a RAM (Random Access Memory) both not shown function, in cooperation, as a main control unit and a confirming unit 310. The confirming unit 310 has a function that, when the pre-reading process unit 308 judges that the mobile station 1 belongs, the confirming unit 310 compares a corrected position obtained by correcting the measurement end position L2 of the mobile station 1 by the positioning unit 301 with one or plural push delivery areas A through J received by the communicating unit (receiving unit) 304 to confirm that the mobile station 1 belongs to the push delivery area A, B, ... or J.

The recording unit (storing unit) 303 records (stores) information on ranges of plural push delivery areas A through J received from the push delivery service providing system 200 on the basis of position information on the mobile station 1.

The input-output unit 307 is used by the user to input data, or for notifying the user of information. The input-output unit 307 comprises a keypad used by the user to input data, a microphone for voice, a display window for outputting a display such as a screen or the like, a ringer for ringing an incoming indicator tone, a speaker or vibrator, an LED (Light Emitting Diode) for display, etc.

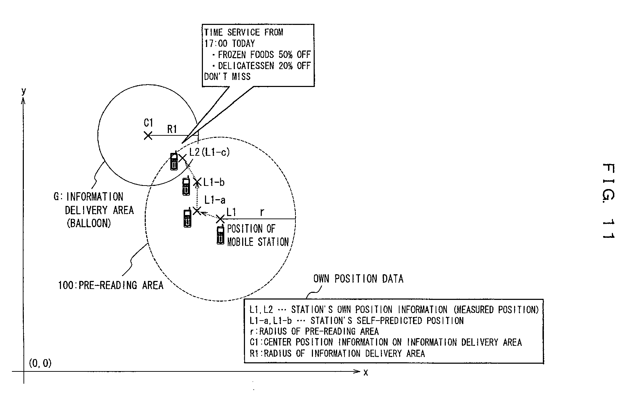

The pre-reading process unit 308 judges whether the mobile station 1 belongs to the push delivery areas A through J on the basis of attribute information (C, R) including a position C and a range R of one or plural push delivery areas A through J existing around the measurement start position L1 specified on the basis of the above latitude, longitude, altitude, azimuth and tilt angle received by the receiving unit, and a self-predicted position (L1-a, L1-b, L1-c) predicted by the mobile station 1 itself calculated from movement information including a direction and quantity of movement of the mobile station 1 itself. The above will be described later with reference to, for example, FIG. 11.

The pre-reading process unit 308 will be now further described in detail. One example of the pre-reading process unit 308 is a JAVA (registered trademark, developed by Sun Microsystems, Inc.) application exclusively used to receive services from the data center 19 by the mobile station 1.

A function of the pre-reading process unit 308 is accomplished by an application for a process to obtain the measurement end position L2 of the mobile station 1, and is started by manually pressing a key (the input-output unit 307) by the user. The pre-reading process unit 308 has a pre-reading flag (pre-reading flag holding unit) 308a representing whether the pre-reading is necessary or not. The pre-reading flag 308a is provided on a RAM or the like. The pre-reading flag 308a can be identified in such way that a bit of the pre-reading flag 308a is 1 when pre-reading is necessary, whereas the bit is 0 when the pre-reading is unnecessary. In other words, when reading "ON" of the pre-reading flag, the pre-reading process unit 308 requests the main control unit 302 to newly measure, whereby the main control unit 302 makes the positioning unit 301 position.

The contents category setting unit 309 is an application for beforehand registering a category or a kind of contents that the user desires to be delivered to the data center 19. "Registration" signifies that the user selects a contents category that the user desired to be delivered among an extremely large number of contents elements held in the data center 19. Namely, it becomes possible to filter one that user requires among a large number of service contents elements such as kinds of shops such as restaurants, toy shops and the like, discounted goods, time service, recommended goods and the like.

Functions of the pre-reading process unit 308 and the contents category setting unit 309 can be accomplished by the CPU 302, the input-output unit 307, the ROM, the RAM and the like, for example. These functions may be provided in the data center 19, or may be automatically activated when the power of the station is switched on.

The transmitting-receiving antenna 300b, the communicating unit 304, the CPU 302 and the input-output unit 307, mainly, cooperate with one another to accomplish a transmitting-receiving function.

The positioning antenna 300a receives radio waves transmitted from a plurality of the GPS satellites 90.

The positioning unit 301 obtains position information using the GPS satellites 90. The positioning unit 301 positions the measurement start position L1 and the measurement end position L2 of the mobile station 1 in a three-dimensional space range and movement information including a direction of movement and a quantity of movement of the mobile station 1. In concrete, the positioning unit 301 positions a latitude, longitude, altitude, azimuth and tilt angle, and extracts position data representing a measured position from the received data. The position data is written in the recording unit 303 for holding data by the CPU 302, and read out to the communicating unit 304 at predetermined intervals.

The gyro sensor unit 305 integrates data relating to tilt angles of the mobile station 1, and outputs it, which detects an angular speed. Outputs of the gyro sensor unit 305 are integrated with respect to time, whereby a quantity of movement of the mobile station 1 from when positioning of the tilt angle of the mobile station 1 is started to the present time can be obtained.

The azimuth sensor-tilt sensor unit 306 is a sensor having both functions of an azimuth sensor for measuring an azimuth, and a tilt inclination sensor for measuring a tilt angle to the horizon. The azimuth sensor calculates a direction (azimuth or direction) of movement of the mobile station 1 using earth magnetism, while the tilt sensor calculates a tilt angle of the mobile station 1 using an acceleration sensor. Information on a state (position, azimuth, tilt angle, angle of roll, pitch angle) in which the mobile station 1 lies is operated by the CPU 302 to obtain which direction and how far the mobile station 1 has moved. A result of the operation is displayed by the input-output unit 307, and recorded in the recording unit 303.

The CPU 302 and the input-output unit 307 mainly cooperate, together with the positioning antenna 300a, the positioning unit 301, the recording unit 303, the gyro sensor unit (3D gyro sensor unit) 305, the azimuth sensor unit 306, and the input-output unit 307, to accomplish the positioning function, whereby a direction of the movement and a quantity of the movement can be obtained, and a measured position of the mobile station 1 can be recognized.

Accordingly, the mobile station 1 has a predicting means for predicating its own position using the mobile station 1 equipped with the positioning unit 301, the azimuth sensor 306, the tilt sensor 304 and the 3D gyro sensor 305 for GPS processing, and an obtaining means for obtaining information on ranges occupied by a plurality of push delivery areas A through J, and a comparing means for comparing a plurality of push delivery areas A through J with its own position.

Accordingly, the mobile station 1 receiving information from the push delivery service providing system 200 distributing information comprises the recording unit 303 for recording a plurality of push delivery area A through J received from the push delivery service providing system 200 on the basis of position information on the mobile station 1, and the main control unit 302 for requesting the push delivery service providing system 200 for delivery when detecting that the mobile station 1 lies in a three-dimensional space range indicated by the push delivery areas A through J.

Whereby, the frequency of positioning is decreased, and pinpoint push delivery of contents of a shop advertisement or the like becomes possible.

As above, the mobile station 1 can obtain advertisement information of a plurality of push delivery areas A through J from the push delivery service providing system 200 by cooperating the transmitting-receiving function and the positioning function.

(2-8) Pre-reading Area 100

In FIG. 1, there is shown a pre-reading area 100 along with a plurality of the push delivery areas A through J. The pre-reading area 100 is an area used to notify the mobile station 1 of information on adjacent push delivery areas A through J from the data center 19 (on the server system's side). In concrete, the data center 19 grasps the position of each mobile station 1, and notifies the mobile station 1 of information on push delivery areas A through J in the vicinity of where the mobile station 1 lies at present.

Accordingly, the data center 19 comprises a notifying unit (19a, 19c) for notifying the mobile station 1 of positions and ranges of a plurality of push delivery areas A through J existing around the position of the user, and an adjusting unit for adjusting a range of the pre-reading area according to the number of the push delivery areas A through J around the mobile station 1.

(3) Description of Positioning Method

(3-1) Known Positioning Method

The mobile station 1 lying in the push delivery area E shown in FIG. 1 transmits and receives data to and from the data center 19 or the positioning server 10 over physical links Q1 and Q2 of the communication network 101. The link Q1 is configured with a radio link between the mobile station 1 and a radio base station (not shown), and a wire link between the radio base station and the positioning server 10. The push delivery service providing system 200 makes the mobile station 1 transmit position data positioned by the mobile station 1 itself using the link Q1 each time the mobile station 1 positions the data in order to always grasp the accurate position of the mobile station 1. The mobile station 1 requests the data center 19 for push delivery in order to obtain push delivery.

The link Q2 is configured with a radio link between the mobile station 1 and the radio base station, and a wire link between the radio base station and the data center 19. The mobile station 1 transmits position information obtained with the GPS satellites 90 to the positioning server 10. The positioning server 10 calculates the position of the mobile station 1 on the basis of the position information, and transmits a result of the calculation to the mobile station 1.

Accordingly, the mobile station 1 frequently transmits and receives over the links Q1 and Q2 position information on the mobile station 1, a receiving process for a push delivery request transmitted when each of the mobile stations 1 enters into a push delivery area, and information data to be push-delivered. A number of mobile stations in the town 150 use the communication network 101, which is a big load on the communication network 101.

(3-2) Positioning Method to Which This Invention Is Applied

Now, a method of predicting a position of the mobile station 1 by itself when the mobile station 1 moves will be described with reference to FIG. 11.

FIG. 11 is a diagram for illustrating how to reduce the frequency of positioning according to the embodiment of this invention, which shows the town area 150 looked from the above. The circular information delivery area G shown in FIG. 11 is an area in which the mobile station 1 is notified of information on the neighborhood of a place where the mobile station 1 lies. The information delivery area G expresses balloon data held as a three-dimensional space on a two-dimensional plane. Namely, the push delivery area G is expressed as spherical or ellipsoidal balloon data projected on a two-dimensional coordinate plane (x, y). The pre-reading area 100 is an area formed with movement of the mobile station 1. Shapes of the both areas are circular, for example. The center positions of the pre-reading area 100 and the push delivery area G are L1 and C1, respectively. Radii of the both areas are r and R1, respectively. L1 and L2 are measured space positions (measured positions) of the mobile station 1. L1-a and L1-b are self-predicted positions (L1-a, L1-b, L1-c) of the mobile station 1. The measurement start position L1 is outside the push delivery area G. Shapes of the both areas may be rectangular. In such case, the center position and a distance from the center position may be variously changed according to the design plan.

In the push delivery service providing method according to this invention, the data center 19 transmits data of each of the push delivery areas A through J determined according to positions and radii of a plurality of push delivery areas A through J (transmitting step). The mobile station 1 compares data relating to each of ranges of the transmitted push delivery areas A through J with a self-predicted position (L1-a, L1-b, L1-c) predicted by the mobile station 1 itself to predict that the mobile station 1 belongs to a push delivery area A, B, ..., or J (predicting step). When it is determined on the basis of an obtained result of the prediction that the mobile station 1 belongs to the area, the mobile station 1 positions the measurement end position L2 of the mobile station 1 itself (positioning step). The mobile station 1 compares a corrected position obtained by correcting the measurement end position 12 obtained by positioning with the push delivery area A, B, ..., or J to confirm that the mobile station 1 belongs to the push delivery area A, B, ..., or J (confirming step). The mobile station 1 requests the data center 19 for delivery information attached to the push delivery area A, B, ..., or J on the basis of a result of the confirmation (requesting step). The data center 19 transmits delivery information to the mobile station 1 in response to the request (contents providing step).

The user with the mobile station 1 moves from the measurement start position L1 to L2 (L1-c) via L1-a and L1-b, and enters into the push delivery area G. During the movement, the user first measures his/her position at the measurement start position L1. When the user moves for a predetermined time, the mobile station 1 predicts the present position with the measured start position L1 being as the starting point, using the gyro sensor unit 305, the azimuth sensor unit 306 and the like, and obtains L1-a as a result of the prediction. When the user further moves for a predetermined time, the mobile station 1 predicts its own position, and obtains L1-b as a result of the prediction. After the user moves for a predetermined time, the mobile station 1 again predicts and obtains L1-c.

The mobile station 1 measures with position information from the GPS satellites 90 even during its movement, thereby accurately knowing a measured position with a result of the measurement along with a result of prediction. The prediction may be performed at predetermined intervals, or another.

Namely, the pre-reading process unit 308 (refer to FIG. 10) judges whether a predicted position of the mobile station 1 belongs to a spherical range having movement information including a direction of movement and a quantity of movement as the center position C, and a range of attribute information (C, R) as a radius R.

When the user moves from L1 toward L2 in order, the mobile station 1 can know movement information (a direction of movement and a quantity of movement) with the gyro sensor unit 305 and the like. The mobile station 1 holds data (C, R) relating to a push delivery area (for example, the push delivery area G), so as to predict whether the mobile station is inside or outside the push delivery area G.

Namely, the mobile station 1 predicts by itself that the mobile station 1 does not lie in the push delivery area G at both points L1-a and L1-b, while predicting that the mobile station 1 lies in the push delivery area G at a point L1-c. When predicting that the mobile station 1 lies in the push delivery area G, the mobile station 1 actually measures in order to confirm a result of the prediction.

The mobile station 1 discriminates the inside of the push delivery area from the outside. At a point predicted that the point is outside the area, the mobile station 1 does not position. Therefore, it is possible to largely decrease the frequency of measurement.

Since the mobile station 1 positions at a position predicted to be in an information push area while predicting its own position, as above, it is possible to decrease the load of the communication network 101 required at the time of measurement, and decrease a necessary load of the positioning server. It is also possible to decrease the packet charge required for successive positioning, it thus becomes easy for the mobile station 1 to receive the information push delivery service.

As above, the mobile station 1 can predict that the mobile station 1 belongs to a push delivery area, and compare an accurate measured position with the push delivery area on the basis of a result of the positioning. The contents attached to the push delivery area, so that the data center (server system) 19 transmits the contents in response to a request from the mobile station 1.

The push delivery service providing system 200 can omit consideration on whether the mobile station 1 is inside or outside a cell area as before. Each administrator can thus freely design contents set in a push range. Further, a special radio protocol such as Bluetooth (registered trademark of a business group promoting standardization of the technique of Bluetooth by Bluetooth-SIG [Bluetooth-Special Interest Group] and establishment of the specifications of the same), for example. Accordingly, it is possible to reduce investment for configuring the push delivery service providing system 200.

(4) Description of Operation

Next, description will be made of a pre-reading process for a pre-reading area in the push delivery service providing method in this system with the above structure.

(4-1) Method of Pre-reading Process by Prediction

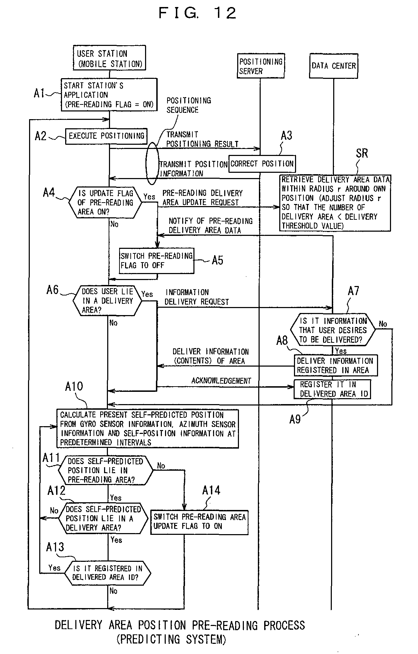

FIG. 12 is a flowchart for illustrating a pre-reading process method by prediction according to the embodiment of this invention. The service is initiated by that the user activates the application in the station, at step A1. In this state, the pre-reading flag is "ON". In a state where the application is activated, the mobile station 1 does not yet grasp the present position. "ON" signifies that the mobile station 1 needs to obtain data of the pre-reading area from the data center 19. The application may be provided in the data center 19, and may be automatically activated when the power source of the station is switched to "ON" without manually activating it.

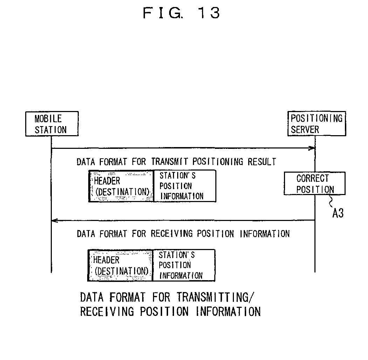

The mobile station 1 positions between itself and the positioning server 10 to obtain the present position (step A2), and transmits a result of the positioning to the positioning server 10. The positioning server 10 corrects the position obtained as a result of the positioning (step A3), and transmits corrected position information to the mobile station 1. Each of data formats for transmitting and receiving position information on both a positioning result and position information is configured with a header including a destination, and measured position information, as shown in FIG. 13, for example.

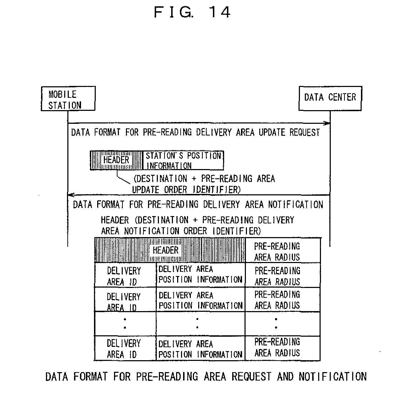

At step A4, the mobile station 1 checks whether the pre-reading update flag is "ON" or not. Since a value of the pre-reading flag is "ON" at step A1, the mobile station 1 obtains re-reading area data from the data center 19. A method of obtaining the data is that a pre-reading delivery area update request is transmitted from the mobile station 1 to the data center 19, delivery area data is retrieved in the data center 19 (retrieving process SR), and retrieved pre-reading delivery area data is notified to the mobile station 1 from the data center 19. Incidentally, a data format for the pre-reading delivery area update request has a header (a destination and a pre-reading area update order identifier) and measured position information, as shown in FIG. 14, for example.

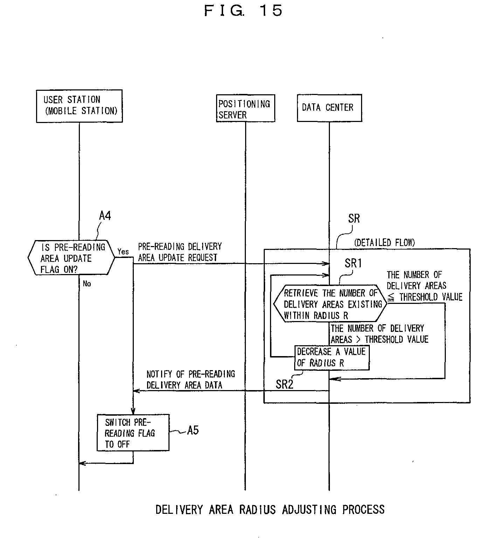

Details of the retrieving process SR in the data center 19 are as shown in FIG. 15, for example. The data center 19 retrieves the number of delivery areas belonging to a radius R (step SR1), where an amount of information is decreased by filtering, as shown in FIG.24. In concrete, when the number of delivery areas is larger than a threshold value beforehand set, the procedure takes a route denoted as (the number of areas > threshold value), a value of the radius R is decreased (step SR2), and the process at step SR1 is continued. When the number of delivery areas is equal to the threshold value at step SR1, the procedure takes a route denoted as (the number of delivery areas $\leqq$ threshold value), and pre-reading delivery area data is notified to the mobile station 1. Whereby, the radius of the pre-reading area is adjusted to a desired size.

The pre-reading area data is data relating to push delivery areas belonging to a pre-reading area having a radius R with a measured position as the center. When the push delivery area is plural, a header (including a destination and a pre-reading delivery area notify order identifier) and a pre-reading area radius, along with plural sets of data, each of which includes three elements; a delivery area ID (Identification), position information on the center of the delivery area (delivery area position information), and a delivery area radius.

At step A5 shown in FIG. 12, the mobile station 1 switches the pre-reading flag to "OFF". The mobile station 1 activates a timer (not shown), and checks by measurement for a predetermined time period whether the mobile station 1 itself lies in a push delivery area or not (step A6). When the mobile station 1 lies in the area, the procedure proceeds along Yes route, and a push distribute request is transmitted to the data center 19.

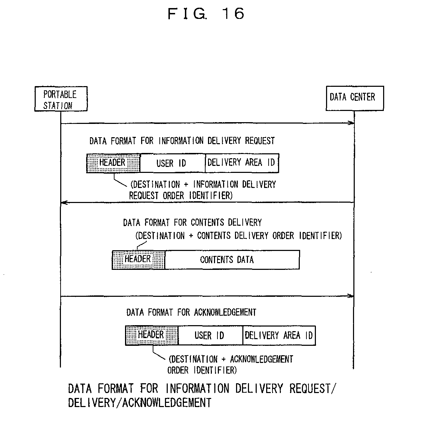

FIG. 16 is a diagram showing examples of data formats for a push delivery request, delivery, and an acknowledgement. A data format for a push delivery request has a header (a destination, and an order identifier for a push delivery request), a user ID and a delivery area ID.

In FIG. 12, when receiving the request, the data center 19 checks on the basis of history information beforehand registered whether the received data is information that the user desires to be delivered (step A7). When the received data is information that the user desires to be delivered, the procedure proceeds along Yes route, and information (contents) registered in the area is delivered to the mobile station 1 (step A8). A data format for contents delivery has a header (a destination and a contents delivery order identifier), and contents data, as shown in FIG. 16, for example. In FIG. 12, when the mobile station 1 receives the contents, the mobile station 19 transmits an acknowledgement to the data center 19. A data format for the acknowledgement has a header (a destination, and an acknowledgement order identifier), a user ID and a delivery area ID.

In FIG. 12, when receiving the acknowledgement, the data center 19 writes "delivered" in the delivered area ID (refer to FIG. 8(c)) of an area in which the mobile station 1 lies at present (step A9). Even when the mobile station 1 returns to this area after moving out from this area and entering into another area, it is possible to prevent the delivered information from being again delivered. When the information is not information that the user desires to be delivered at step A7, the procedure proceeds along No route, the data center 19 does not deliver the information. When the mobile station 1 judges that the mobile station 1 lies outside the push delivery area at step A6, the procedure proceeds along No route.

At step A10, the mobile station 1 calculates its own position at present in a predetermined cycle, on the basis of gyro sensor information , azimuth sensor information and measured position information, and makes three kinds of checks, as follows. Namely, the mobile station 1 checks using a result of the calculation whether a self - position (L1-a, L2-b, L1-c) belongs to the pre-reading area (step A11). When not, the procedure proceeds along No route, the mobile station 1 switches the re-reading area update flag to "ON" (step S14), and the process from step A1 is executed.

When the self-predicted position (L1-a, L1-b, L1-c) belongs to the pre-reading area at step A11, the procedure takes Yes route, and the mobile station 1 checks whether the self - predicted position (L1-a, L1-b, L1-c) belongs to a delivery area or not (step A12). When the mobile station 1 judges that the self-predicted position (L1-a, L1-b, L1-c) does not lies in the delivery area, the procedure takes No route, and the process at step A1 is executed. When the mobile station 1 judges at step A12 that the self-predicted position (L1-a, L1-b, L1-c) lies in the delivery area, the procedure takes Yes route, and the mobile station 1 checks whether the delivery area has been written in the distributed area ID (refer to FIG. 8(c)) (step A13). When it has been delivered, the procedure takes Yes route, and returns to the process at step A10. When it is not yet delivered, the procedure takes No route, and the process at step A1 is executed.

Since the mobile station 1 can pre-read the push delivery areas A through J, and whether information of each area has been delivered or not can be managed for each mobile station 1 as above, it is possible to prevent redundant information from being delivered.

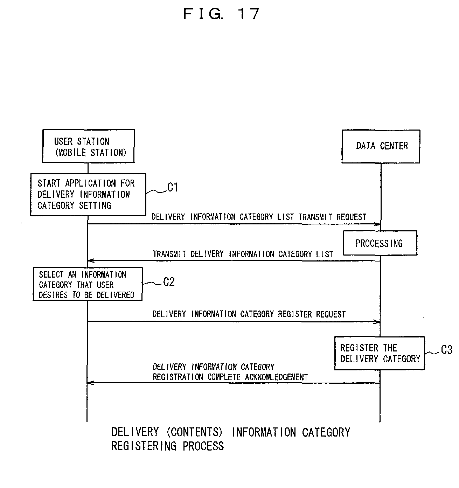

At steps A7 and A8, the data center 19 beforehand registers contents that the user desires to be delivered. A method of the registration will be next described with reference to FIG. 17.

(4-2) Delivery Desired Information Registering Method

FIG. 17 is a flowchart for illustrating a process of registering a contents category according to the embodiment of this invention. At step C1 shown in FIG. 17, the mobile station 1 activates the contents category (delivery information category) setting unit 309, and requests the data center 19 to transmit a list of delivery information categories. When receiving the request, the data center 19 performs a predeterminedprocess, and transmits a list of delivery information categories to the mobile station 1. When the user selects an information category that the user desires to be delivery from the list (step C2), the mobile station 1 transmits a delivery information category register request to the data center 19. The data center 19 registers the delivery category (step C3), and notifies the mobile station 1 of completion of delivery information category registration.

Since the user can beforehand register contents that the user desires to the data center 19 as above, the enterprise or shop can provide highly effective advertisements to the user.

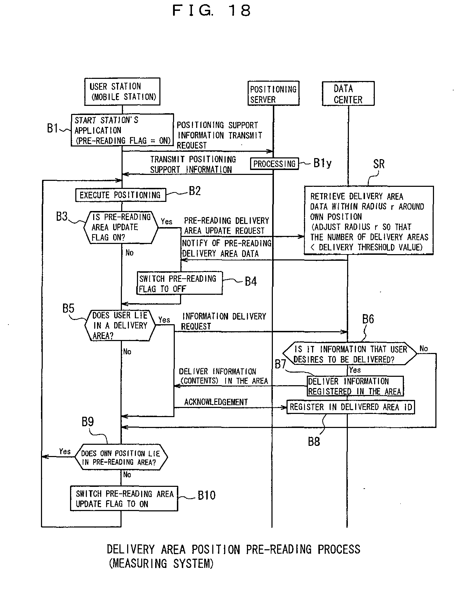

Next, description will be made of a method for pre-reading a delivery area position by measurement with reference to FIG. 18.

(4-3) Pre-reading Process Method by Measurement

FIG. 18 is a flowchart for illustrating a pre-reading process method by measurement according to the embodiment of this invention.

When the mobile station 1 activates the application therein (step B1), the service is started. Here, the pre-reading flag is "ON", which signifies that data of the pre-reading area should be obtained from the data center 19. The mobile station 1 requests the positioning server 10 to transmit positioning support information. When receiving the request, the positioning server 10 performs a process (step B1y), and transmits positioning support information to the mobile station 1.

The mobile station 1 execute positioning (step B2), and checks whether the pre-reading area update flag is "ON" or not (step B3). When a value of the pre-reading flag is "ON", the procedure proceeds along Yes route, and pre-reading delivery area data is notified to the mobile station 1 from the data center 19. A method of notifying of data is as follows. When a pre-reading delivery area update request is transmitted from the mobile station 1 to the data center 19, the data center 19 retrieves delivery area data within a radius r around a measured position (retrieving process SR shown in FIG. 15), and notifies the mobile station 1 of retrieved pre-reading delivery area data. When receiving the pre-reading delivery area data, the mobile station 1 switches the pre-reading flag to "OFF" (step B4). Incidentally, a data format of the pre-reading delivery area update request is similar to that shown in FIG. 14.

When the value of the pre-reading flag is "OFF" at step B3, the procedure proceeds along No route, and the mobile station 1 checks whether the user lies in a delivery area or not (step B5). When the user lies in the area, the procedure proceeds along Yes route, and the mobile station 1 transmits a push delivery request to the data center 19. When receiving the request, the data center 19 checks whether the received data is information that the user desires to be delivered or not (step B6). When the received data is information that the user desires to be delivered, the procedure proceeds along Yes route, and the data center 19 delivers information (contents) registered in the area to the mobile station 1 (step B7). When receiving the information, the mobile station 1 transmits an acknowledgement to the data center 19. When receiving the acknowledgement, the data center 19 writes "delivered" in the delivered area ID (refer to FIG. 8(c)) indicating the area (step B8). When the information is not information that the user desires to be delivered at step B6 , the procedure proceeds along No route, and the data center 19 does not deliver the information.

When the user lies outside the delivery area at step B5, the procedure proceeds along No route, and the mobile station 1 checks whether the measured position belongs to the pre-reading area or not (step B9). When yes , the procedure proceeds along Yes route, and the process at step B2 is executed. When no, the procedure proceeds along No route, and the mobile station 1 switches the pre-reading area update flag to "ON" at step B10.

Accordingly, the mobile station 1 can measure a position of a delivery area and pre-read. The mobile station 1 can know in which direction and how far the mobile station 1 has moved on the basis of a state (position, azimuth, tilt angle, angle of roll, pitch angle) where the mobile station 1 itself lies, using the GPS satellites 90, the azimuth sensor-tilt sensor unit 306 and the gyro sensor unit 305. The push delivery service providing system 200 beforehand downloads information on a plurality of push delivery areas A through J existing around the station from the data center 19 to the station, and the mobile station 1 periodically compares it with a self-predicted position. The user can thereby predict whether the mobile station 1 lies in a push delivery area or not.

When the mobile station 1 predicts that the mobile station 1 lies in the push delivery area, the mobile station 1 positions itself, thereby accurately recognizing its own position. When the mobile station 1 is outside the push delivery area, the mobile station 1 transmits a contents transmit request to the positioning server 10. The positioning server 10 refers to delivery permissibility setting information on the user who has transmitted the request. Only when the setting information is "delivery permitted", the positioning server 10 delivers contents attached to the area to the station.

The above description is about when the pre-reading area contacts with one push delivery area.

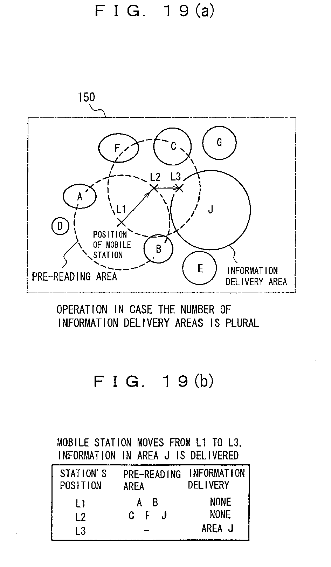

Next, a case where the pre-reading area contacts with a plurality of push delivery areas A through J will be described with reference to FIGS. 19(a) and 19(b).

(4-4) When The Number of Pre-reading Areas Is Plural

FIGS. 19(a) and 19(b) are diagrams for illustrating an operation in the case where the pre-reading area contacts with a plurality of push delivery areas A through J. In the town area 150 shown in FIG. 19(a), there are a plurality of push delivery areas A through G and J. The mobile station 1 moves through positions L1, L2 and L3 shown in FIG. 19(a) in order. FIG. 19(b) shows relationships among a measuredposition, apre-readingareaandpushdelivery contents. The pre-reading area at the time when a position of the mobile station 1 is L1 contacts with the push delivery areas A and B. At the time of L2, the pre-reading area contacts with the push delivery areas C, F and J. When the mobile station 1 reaches L3, the pre-reading process unit 308 of the mobile station 1 regards that the mobile station 1 reaches the push delivery area J. In this case, it is determined that the pre-reading area is unnecessary. Even when the pre-reading area contacts with a plurality of push delivery areas A through J , the mobile station 1 can obtain an appropriate push delivery area, while the communication network 101 can avoid a large amount of data from being transmitted and received, which allows a large reduction of the load on the communication network 101. Further, it is possible to speed up the communication owing to a decrease of the data amount.

According to this invention, it is possible to decrease the frequency of positioning of a measured position, and accurately obtain shop information limited to the neighborhood of a position of the user. The enterprise can accurately provide shop information limited to the neighborhood of a position of the user to the user.

(5) Description of An Example of Effects of the Invention

Hereinafter, description will be made of an example of achieved efficiency brought by the push delivery service providing system 200. Incidentally, numeral values are merely examples , thus this invention is not limited to these values.

(5-1) the number of balloon data elements that can be accumulated in the memory of a portable telephone:

$$\text{the number of balloon data elements} = (\text{capacity of memory of JAVA data unit}) \div (\text{amount of data of one balloon}) = 1000$$

Here, the JAVA data unit corresponds to the above JAVA application. A memory capacity of the JAVA data unit is 100 KB (kilobyte), thus an amount of data of one balloon is 100 bytes when estimated relatively large. Incidentally, JAVA is a registered trademark, as described above.
(5-2) the number of balloons on one side of an area occupied by 1000 balloons:

$$\text{the number of balloons} = \text{square roots of } 1000 = \text{about } 31$$

(5-3) distance of one side of each area:

$$\text{distance} = 31 \ (\text{balloons}) * (\text{diameter of one balloon}) = 1550 \ (\text{m})$$

Here, * represents multiplication, and a diameter of one balloon is 50 m (a value used in the prototype experiment).
(5-4) time required when the user walks straight along one side of the area:

$$\text{time} = 1550 * 60 \div (\text{walking speed of man}) = 23.5 \ (\text{min.})$$

Here, a walking speed of man is assumed to be 4000 m/hour.
(5-5) the number of accesses to the network (communication network 101)

Heretofore, the number of accesses is given by, 23 minutes ÷ (network access frequency) = 23. This time, one access. Here, the network access frequency is assumed to be one/min.
By calculation at (5-1) to (5-5), it is possible to reduce the network access frequency to 1/23 from the viewpoint of the efficiency.

(6) Description of Modifications

Note that the present invention is not limited to the above examples, but may be modified in various ways without departing from the scope of the invention.

(6-1) Service of Providing Information through A Plurality of Balloons

The push delivery service providing system 200 can provide information through a plurality of balloons as a service in another mode. When information of an adjacent balloon among a plurality of balloons, or information of a balloon among specifically linked balloons is updated, the update is performed in other balloons, as well.

(6-1-1) Example Where Update of A Balloon Is Linked among Shops

In the case where the head shop and a plurality of branch shops or chain shops register balloons, when the head shop updates the information, the balloons of all of other branch shops or chain shops are updated in linkage by updating only the balloon of the main shop. It is thereby possible to keep the identity of data of the shops.
Alternatively, it is possible to link balloons of shops in linkage with business information in each area. For example, each of shops in Tokyo, Osaka and New York may register a balloon, and the balloons may be updated.

(6-1-2) Traffic Information Notification Service

The push delivery service providing system 200 registers balloons representing traffic information at predetermined intervals or in service areas on a speedway, and the information of each of the linked balloons is updated by registration. The user can obtain a degree of traffic jam of vehicles, weather information and the like.

As another example, a lorry carrying a dangerous article registers safety information (for example, the name of a counteractive or the like) on the dangerous article to balloons. By registration, the safety information is transmitted through a plurality of linked balloons, it is thus possible to give warning to drivers in vehicles on the road.

(6-1-3) Example Where Homepage of Originator of Link Is Updated

The push delivery service providing system 200 can statically transmit information in a homepage introducing a noted product in each area when a link is set in each area. If a homepage of the originator of the link refers information of a plurality of balloons, a user visiting all other homepages referring to the balloons can obtain updated information when contents of each of the balloons are updated.

The push delivery service providing system 200 can transmit information through a plurality of balloons. Whereby, when the user pushes a part of it, this effects influences to other or all parts as if a domino phenomenon. Accordingly, a plurality of associations can push-deliver desired information.

(6-2) Method of Managing Push Delivery Areas A through J as Two-dimensional Planes

The above three-dimensional space range may be a two-dimensional area range, managed by the delivery information holding unit 19c, and handled by both the data center 19 and the mobile station 1.

(6-2-1) Data Center 19

The data center 19 may be equipped with a mobile station 1 which can position its own position, a direction of movement and a quantity of movement thereof on a two-dimensional plane, and may have a delivery information holding unit 19c, a notifying unit (19a, 19c) and a process accepting unit 19a. The delivery information holding unit 19c holds a plurality of balloon data elements in which each of a plurality of push delivery plane data elements having attribute information (C, R) including center positions C and radii R of the push delivery planes is related with each of plural pieces of delivery information including various information or service information to be provided in the push delivery planes.

The notifying unit (19a, 19c) receives a measurement start position specified on the basis of a latitude, longitude, altitude, azimuth and tilt angle of the mobile station 1 transmitted from the mobile station 1, extracts one or a plurality of push delivery plane data elements belonging to a radius around the measurement start position L1 as the center from the delivery information holding unit 19c, and notifies the mobile station 1 of one or plural pieces of attribute information including the center position C and the radius R of the extracted one or a plurality of push delivery plane data elements. When it is judged in the mobile station 1 notified of the attribute information (C, R) from the notifying unit (19a, 19c) that a measurement end position L2 of the mobile station 1 calculated from the measurement start position L1 and a direction of movement and a quantity of movement positioned by the mobile station 1 itself belongs to a push delivery plane belonging to a circle having the radius R with the center position C being as the center of the attribute information (C, R) notified from the notifying unit (19a, 19c), the process accepting unit 19a provides delivery information of balloon data corresponding to not less than one piece of attribute information judged to belong thereto to the mobile station 1.

The notifying unit (19a, 19c) may predict a self-predicted position (L1-a, L1-b, L1-c) of the mobile station 1 on the basis of the measurement start position L1 of the mobile station 1, and notify of attribute information (C, R) on a plurality of two-dimensional planes existing around the self-predicted position (L1-a, L1-b, L1-c). Additionally, it is possible to adjust the range of a pre-reading push delivery area A through J within a predetermined number according to the number of two-dimensional plane data elements.

The delivery information holding unit 19c may have a two-dimensional plane data holding unit which relates a position C and a range R of each of a plurality of two-dimensional planes with each type of delivery information and holds them, and a delivery information holding unit which holds delivery information of a plurality of two-dimensional planes. Further, the delivery information holding unit 19c may relate a user ID, a delivery area ID and a distributed area ID to one another, and hold them.

(6-2-2) Mobile Station 1

The mobile station 1 is similar in the above points.

Namely, a positioning unit 301 can position a latitude, longitude, altitude, azimuth and tilt angle that can specify movement information including a measurement start position L1, a measurement end position L2, a direction of movement and a quantity of movement of the mobile station 1 on the push delivery planes A through J. Further, a transmitting unit transmits the measurement start position L1 positioned by the positioning unit to the system. On the system's side, data of one or a plurality of push delivery planes A through J belonging to a radius R with the measurement start position L1 being the center transmitted from the transmitting unit is extracted. The receiving unit receives attribute information (C, R) including a position C and a range R of one or a plurality of the extracted push delivery planes A through J.

A pre-reading process unit judges whether the mobile station 1 belongs to a push delivery plane A, B, ..., or J on the basis of the attribute information (C, R) received by the receiving unit from the system and a self-predicted position predicted by the mobile station 1 itself in calculation using movement information positioned by the positioning unit. A confirming unit 310 confirms whether the mobile station 1 belongs to one or a plurality of the two-dimensional planes received by the receiving unit on the basis of a result of the judgement made by the pre-reading processing unit.

(7) Method of Providing A Virtual Three-dimensional Space

Next description will be made of a service of how to assign a balloon to a user (an enterprise, a shop or the like) who desires to insert information to a balloon in the above push delivery service providing system 200, and how to make a profit. For example, a virtual space (representing a space corresponding to a set of three-dimensional space information of balloons stored in the server) corresponding to an actual space (real space) into meshes, and the virtual spaces are sold on a homepage of the push delivery service providing system 200. The user accesses to the home page over the Internet, and selects a desired virtual space from among the plural divided virtual spaces corresponding to the real spaces.

As a result, a charge or the like for inserting an advertisement or the like in the virtual space that the user has selected (this being a balloon, which has predetermined three-dimensional space information) is displayed, and it is registered if the user wishes. Whereby, the user can use the divided virtual space. In other words, it is possible to establish a link between a predetermined three-dimensional space with a URL (Uniform resource Locator) in which an advertisement or the like is put. A method of setting registration or the like of the information is described in Japanese Patent Application No. 2000-318537 (Application Date: October 18, 2000) by the same applicant.

Setting or the like of the charge may be voluntarily set by a service provider of the push delivery providing system 200 or a space information providing system as disclosed in the above patent application, or may be linked with a land price of the real space. For example, land price information per one meter square in the real space is related with real three-dimensional space information (latitude, longitude), and tabulated. A basic charge for inserting an advertisement or the like is decided, and the basic charge is increased or decreased according to land price information in the table on the basis of latitude-longitude information on a real space corresponding to latitude-longitude information on a selected virtual space that the user desires. Whereby, charge setting for a virtual section corresponding to land price information becomes possible.

The virtual three-dimensional space providing method of this invention is a method, used in the push delivery service providing system 200, of relating virtual three-dimensional space information corresponding to a real three-dimensional space with provided information from a user such as an enterprise, a shop or the like, or related information of the provided information, storing them, thereby providing information relating to position information on a client user who desires to be provided the information to the client user. The administrator beforehand divides the virtual three-dimensional space information into plural pieces of virtual three-dimensional space information. When a user such as an enterprise, a shop or the like who desires to provide information selects not less than one virtual three-dimensional space corresponding to a real three-dimensional space that the user desires from among plural pieces of the divided virtual three-dimensional space information, a charge corresponding to the selected virtual three-dimensional space is presented.

Since a range of virtual three-dimensional space information is variable, it is possible to decrease the range in the heart of a town, or increase the range in the suburbs. Namely, it is possible to change the density of service contents according to a service area.

In concrete, land price information on A point in the real space is set to A Yen, land price information on B point is set to B Yen, a basic charge for use of virtual space information is set to C Yen, and a land price of a corresponding real space is set to D Yen. When the user selects a virtual space corresponding to the A point in the real space, the charge is determined as below:

```
Charge = C×A/D (where × and / represent
multiplication and division, respectively.)
```

A charge for use of the virtual space that the use selects can be automatically determined from the above table and through the above operation. Incidentally, the above calculating method is merely an example. It is possible to flexibly set the charge in another manner. For example, when the charge becomes expensive to some degree, the charge is multiplied by a coefficient 0.9, or when the charge becomes cheap to some extent, the charge is multiplied by a coefficient 1.1.

Having been described a sales service of a virtual space to a user who desires to insert an advertisement in a virtual space, the above is merely an example, and the method or the charge setting over the Internet is merely one mode of the embodiment. Note that the present invention is not limited to the above examples.

**Claims**

1. A push delivery service providing method for delivering information wirelessly from a server system (10; 19) to a user station (1) when the user station is located in at least one push delivery space among a plurality of pre-registered push delivery spaces (A to J), each said pre-registered push delivery space having delivery information relating to the space concerned, and the method **characterized by** the steps of:

   holding in said server system attribute information and such delivery information for each of the plurality of push delivery spaces, the attribute information for each said space including at least position information (C) specifying a position of the space concerned and range information (R) relating to an extent of the space concerned;
   obtaining a position (L1) of the user station and transmitting a result of the positioning to the server system;
   transmitting from the server system to the user station the attribute information for the or each said space that is within a pre-reading region (100) set in dependence upon the position (L1) of the user station;
   judging in the user station, based on the attribute information for the or each said space within said pre-reading region and on a position (L1-a, L1-b, L1-c; L2) of the user station, whether the user station is within one of the spaces;
   if it is judged by the user station that the user station is within one of the spaces, transmitting a request from the user station to the server system for delivery of the delivery information relating to the space concerned; and
   at the server system, transmitting the delivery information relating to the space concerned to the user station in response to the request.

2. A method as claimed in claim 1, wherein the judging step comprises:

   making at least one provisional judgement (A12) of whether the user station is within one of the said spaces based on a self-predicted position (L1-a, L1-b, L1-cf) of the user station; and
   if such a provisional judgement is that the user station is within one of the said spaces, making a final judgement (A6) of whether the user station is within one of the spaces based on a measured position of the user station.

3. A method as claimed in claim2, wherein, after carrying out the provisional judgement, the position of the user station is determined again and the final judgement is based on the newly-determined position (L2) of the user station.

4. A method as claimed in claim 2 or 3, wherein the user-station position (L1-a, L1-b, L1-c) for at least one provisional judgement (A12) is determined using a non-GPS-satellite source.

5. A method as claimed in claim 2, 3 or 4, wherein the user-station position (L1-a, L1-b, L1-c) for at least one provisional judgement is estimated (A10) by employing movement information, obtained by the user station and relating to movement of the user station, to modify a previously-determined user-station position (L1).

6. A method as claimed in claim 5, wherein the user station supplies said movement information and position information relating to the previously-determined position (L1) to the server system, and the user-station position (L1-a, L1-b, L1-c) for the provisional judgement is estimated by the server system based on the supplied movement information and position information.

7. A method as claimed in any one of claims 2 to 6, wherein the user-station position (L2) for the final judgement is determined using GPS satellites (A2; B2).

8. A method as claimed in claim 7, wherein the user station supplies the user station position (L2), obtained by the user station when determining the user-station position for the final judgement, to the server system, and the server system corrects (A3) a positioning error contained in the supplied position data, and the user-station position for the final judgement is based on the corrected position data.

9. A method as claimed in any preceding claim, wherein the user-station position (L1) used to set the pre-reading region (100) in the attribute information transmitting step is determined using GPS satellites.

10. A method as claimed in any preceding claim, wherein said pre-reading region (100) is a circular or spherical region having the user-station position (L1) as a centre position and extending by a predetermined radius (r) from the centre position.

11. A method as claimed in any preceding claim, wherein each said push delivery space is a two-dimensional space.

12. A method as claimed in claim 11, wherein each said two-dimensional space is circular.

13. A method as claimed in any one of claims 1 to 10, wherein each said push delivery space is a three-dimensional space.

14. A method as claimed in claim 13, wherein each said three-dimensional space is spherical.

15. A method as claimed in claim 12 or 14, wherein saidpositioninformation (C) included in the attribute information specifies a centre position of the space and the range information (R) included in the attribute information specifies a radius of the space concerned.

16. A method as claimed in any preceding claim, wherein in the attribute information transmitting step the user-station position (L1) is determined by the user station and position information identifying that position is transmitted by the user station to the server system, and the server system sets the pre-reading region in dependence on the transmitted position information.

17. A method as claimed in any preceding claim, wherein in the attribute information transmitting step the pre-reading region (100) is set (SR1, SR2) such that the number of said push delivery spaces within the region does not exceed a threshold value.

18. A method as claimed in any preceding claim, wherein the delivery information transmitting step comprises registering (A9; B8) at the server system information indicating whether or not delivery information for a particular push delivery space has already been delivered to the user station and employing the registered information to prevent the same delivery information being delivered again to the user station.

19. Push delivery service providing apparatus, comprising a server system (10; 19) and a user station (1), for delivering information wirelessly from the server system to the user station when the user station is located in at least one push delivery space among a plurality of pre-registered push delivery spaces (A to J), each said pre-registered push delivery space having delivery information relating to the space concerned, and the apparatus **characterized by**:

holding means (19b, 19c), provided in the server system, for holding attribute information and such delivery information for each of the plurality of push delivery spaces, the attribute information for each said space including at least position information (C) relating to a position of the space concerned and range information (R) relating to an extent of the space concerned;

means provided in the user station for obtaining a position of the user station and transmitting a result of the positioning to the server system;

attribute information transmitting means (19g), provided in the server system, for transmitting to the user station the attribute information for the or each said space that is within a pre-reading region (100) set in dependence upon the position (L1) of the user station;

judging means (308, 301), provided in the user station, for judging, based on the attribute information for the or each said space within said pre-reading region and on a position (L1-a, L1-b, L1-c, L2) of the user station, whether the user station is within one of the spaces;

request transmitting means (302), provided in the user station and operable, if it is judged by the judging means that the user station is within one of the said spaces, to transmit a request from the user station to the server system for delivery of the delivery information relating to the space concerned; and

delivery information transmitting means (19g), provided in the server system, for transmitting the delivery information relating to the space concerned to the user station in response to the request.

20. A server system, for use in push delivery service providing apparatus adapted to deliver information wirelessly to a user station (1) when the user station is located in at least one push delivery space among a plurality of pre-registered push delivery spaces (A to J), each said pre-registered push-delivery space having delivery information relating to the space concerned, and the server system (10, 19) **characterized by**:

holding means (19b, 19c) for holding attribute information and such delivery information for each of the plurality of push delivery spaces, the attribute information for each said space including at least position information (C) relating to a position of the space concerned and range information (R) relating to an extent of the space concerned;

attribute information transmitting means (19g) for transmitting to the user station the attribute information for the or each said space that is within a pre-reading region (100) set in dependence upon a position (L1) of the user station transmitted to the server system by the user station;

request receiving means (19a) for receiving from the user station a request for delivery of the delivery information relating to a specified one of the spaces in which the user station has judged it is currently located; and

delivery information transmitting means (19g) for transmitting the delivery information relating to the space concerned to the user station in response to the request.

21. A server system as claimed in claim 20, further comprising:

position information receiving means (19a) for receiving from the user station movement information, relating to movement of the user station, and position information relating to a previously-determined position (L1) of the user station; and

position estimating means (19f) for estimating a position of the user station based on the received movement information and position information.

22. A server system as claimed in claim 20 or 21, wherein said attribute information transmitting means (19g) are operable to receive from the user station position information identifying a position of the user station determined by the user station and to set the pre-reading region (100) in dependence on the received position information.

23. A server system as claimed in claim 20, 21 or 22, wherein the attribute information transmitting means (19g) are operable to set the pre-reading region (100) such that the number of push delivery spaces within the region does not exceed a threshold value.

24. A server system as claimed in any one of claims 20 to 23, wherein the delivery information transmitting means further comprises delivery registering means (19d) for registering information indicating whether or not delivery information for a particular push delivery space has already been delivered to the user station, and the delivery information transmitting means (19g) are operable to employ the registered information to prevent the same delivery information being delivered again to the user station.

25. A user station, for use in push delivery service providing apparatus adapted to deliver information wirelessly from a server system (10, 19) of the apparatus to the user station when the user station is located in at least one push delivery space among a plurality of pre-registered push delivery spaces (A to J), each said pre-registered push delivery space having delivery information relating to the space concerned, and the server system holding attribute information and delivery information for each of the plurality of push delivery spaces, the attribute information for each said space including at least position information (C) relating to a position of the space concerned and range information (R) relating to an extent of the space concerned, said user station **characterized by**:

means for obtaining a position of the user station and transmitting a result of the positioning to the server system;

attribute information recording means (303) for receiving from the server system the attribute information for the or each said space that is within a pre-reading region (100) set in dependence upon a position (L1) of the user station, and for recording the received attribute information;

judging means (308, 310) for judging, based on the recorded attribute information for the or each said space within said pre-reading region and on a position of the user station, whether the user station is within one of the spaces; and

request transmitting means (302) operable, if it is judged by the judging means that the user station is within one of the spaces, to transmit a request to the server system for delivery of the delivery information relating to the space concerned.

26. A user station as claimed in claim 25, wherein the judging means (308) are operable to make at least one provisional judgement (A12) of whether the user station is within one of the spaces based on a self-predicted position (L1-a, L1-b, L1-c, L2) of the user station and are further operable, if the provisional judgement is that the user station is within one of the spaces, to make a final judgement (A2) of whether the user station is within one of the spaces based on a measured position of the user station.

27. A user station as claimed in claim 26, wherein said judging means (308) are operable, after making the provisional judgement based on one determined user-station position (L1-a, L1-b, L1-c, L2), to determine the user-station position again and to make the final judgement based on the newly-determined user-station position (L2).

28. A user station as claimed in claim 26 or 27, wherein the judging means (308) are operable to determinetheuser-stationposition (L1-a, L1-b, L1-c) for at least one provisional judgement using a non-GPS-satellite source.

29. A user station as claimed in any one of claims 26 to 28, wherein the judging means comprise estimating means (305, 306, 301) operable to estimate the user-station position (L1-a, L1-b, L1-c) for at least one provisional judgement by employing movement information relating to movement of the user station to modify a previously-determined position (L1) of the user station.

30. A user station as claimed in any one of claims 26 to 28, further comprising
estimation information transmitting means (304) for transmitting to the server system movement information relating to movement of the user station and position information relating to a previously-determined user-station position (L1) for use by the server system to estimate the user-station position (L1-a, L1-b, L1-c).

31. A user station as claimed in any one of claims 26 to 30, wherein the judging means (308) are operable to determine the user-station position (L2) for the final judgement using GPS satellites.

32. A user station as claimed in claim 31, wherein the judging means (308) are operable to supply the user station position (L2), obtained by the user station when determining the user-station position (L2) for the final judgement, to the server system so that the server system can correct an error obtained in the supplied position data, the judging means being further operable to carry out the final judgement based on the corrected position data.

33. A user station as claimed in any one of claims 25 to 32, further operable to determine the user-station position (L1) used for setting the pre-reading region (100) using GPS satellites and to transmit position information specifying the position concerned to the server system for the server system to use to set the pre-reading region (100).

**Patentansprüche**

1. Push-Delivery-Dienstangebotsverfahren zum drahtlosen Übermitteln von Informationen von einem Server-System (10; 19) an eine Nutzerstation (1), wenn sich die Nutzerstation in mindestens einem Push-Delivery-Raum unter mehreren zuvor registrierten Push-Delivery-Räumen (A bis J) befindet, wobei jeder zuvor registrierte Push-Delivery-Raum Delivery-Informationen über den betreffenden Raum besitzt, und wobei das Verfahren durch folgende Schritte gekennzeichnet ist:

    Speichern, in dem Server-System, von Attributinformationen und solcher Delivery-Informationen für jeden der mehreren Push-Delivery-Räume, wobei die Attributinformationen für jeden Raum mindestens Positionsinformationen (C), die eine Position des betreffenden Raumes spezifizieren, und Entfernungsinformationen (R) über eine räumliche Erstreckung des betreffenden Raumes enthalten;
    Erhalten einer Position (L1) der Nutzerstation und Senden eines Ergebnisses der Positionsbestimmung an das Server-System;
    Senden, von dem Server-System an die Nutzerstation, der Attributinformationen für den oder jeden Raum, der sich innerhalb einer Vorerfassungsregion (100) befindet, die in Abhängigkeit von der Position (L1) der Nutzerstation eingestellt ist;

Beurteilen, in der Nutzerstation, auf der Grundlage der Attributinformationen für den oder jeden Raum innerhalb der Vorerfassungsregion und einer Position (L1-a, L1-b, L1-c; L2) der Nutzerstation, ob sich die Nutzerstation innerhalb eines der Räume befindet;

wenn durch die Nutzerstation beurteilt wird, dass sich die Nutzerstation innerhalb eines der Räume befindet, Senden einer Anforderung von der Nutzerstation an das Server-System für die Übermittlung der Delivery-Informationen bezüglich des betreffenden Raumes; und

in dem Server-System, Senden der Delivery-Informationen bezüglich des betreffenden Raumes an die Nutzerstation in Reaktion auf die Anforderung.

2. Verfahren nach Anspruch 1, wobei der Schritt des Beurteilens Folgendes umfasst:

Vornehmen mindestens einer vorläufigen Beurteilung (A12), ob sich die Nutzerstation innerhalb eines der Räume befindet, anhand einer selbst-prognostizierten Position (L1-a, L1-b, L1-cf) der Nutzerstation; und

wenn eine solche vorläufige Beurteilung lautet, dass sich die Nutzerstation innerhalb eines der Räume befindet, Vornehmen einer endgültigen Beurteilung (A6), ob sich die Nutzerstation innerhalb eines der Räume befindet, anhand einer gemessenen Position der Nutzerstation.

3. Verfahren nach Anspruch 2, wobei, nach dem Ausführen der vorläufigen Beurteilung, die Position der Nutzerstation erneut ermittelt wird und die endgültige Beurteilung auf die neu ermittelte Position (L2) der Nutzerstation gestützt wird.

4. Verfahren nach Anspruch 2 oder 3, wobei die Nutzerstationsposition (L1-a, L1-b, L1-c) für mindestens eine vorläufige Beurteilung (A12) unter Verwendung einer Nicht-GPS-Satellitenquelle bestimmt wird.

5. Verfahren nach Anspruch 2, 3 oder 4, wobei die Nutzerstationsposition (L1-a, L1-b, L1-c) für mindestens eine vorläufige Beurteilung (A10) unter Nutzung von Bewegungsinformationen, die durch die Nutzerstation erhalten wurden und sich auf eine Bewegung der Nutzerstation beziehen, geschätzt wird, um eine zuvor festgestellte Nutzerstationsposition (L1) zu modifizieren.

6. Verfahren nach Anspruch 5, wobei die Nutzerstation die Bewegungsinformationen und Positionsinformationen bezüglich der zuvor festgestellten Position (L1) an das Server-System übermittelt und die Nutzerstationsposition (L1-a, L1-b, L1-c) für die vorläufige Beurteilung durch das Server-System auf der Grundlage der übermittelten Bewegungsinformationen und Positionsinformationen geschätzt wird.

7. Verfahren nach einem der Ansprüche 2 bis 6, wobei die Nutzerstationsposition (L2) für die endgültige Beurteilung unter Nutzung von GPS-Satelliten (A2; B2) ermittelt wird.

8. Verfahren nach Anspruch 7, wobei die Nutzerstation die Nutzerstationsposition (L2), die durch die Nutzerstation bei der Feststellung der Nutzerstationsposition für die endgültige Beurteilung erhalten wurde, an das Server-System übermittelt und das Server-System einen in den übermittelten Positionsdaten enthaltenen Positionsbestimmungsfehler korrigiert (A3), und wobei die Nutzerstationsposition für die endgültige Beurteilung auf den korrigierten Positionsdaten basiert.

9. Verfahren nach einem der vorangehenden Ansprüche, wobei die Nutzerstationsposition (L1), die zum Einstellen der Vorerfassungsregion (100) im Schritt des Sendens von Attributinformationen verwendet wird, unter Verwendung von GPS-Satelliten bestimmt wird.

10. Verfahren nach einem der vorangehenden Ansprüche, wobei die Vorerfassungsregion (100) eine kreisförmige oder kugelförmige Region ist, in der die Nutzerstationsposition (L1) eine Mittelposition einnimmt und die sich um einen zuvor festgelegten Radius (r) von der Mittelposition erstreckt.

11. Verfahren nach einem der vorangehenden Ansprüche, wobei jeder Push-Delivery-Raum ein zweidimensionaler Raum ist.

12. Verfahren nach Anspruch 11, wobei jeder zweidimensionale Raum kreisförmig ist.

13. Verfahren nach einem der Ansprüche 1 bis 10, wobei jeder Push-Delivery-Raum ein dreidimensionaler Raum ist.

14. Verfahren nach Anspruch 13, wobei jeder dreidimensionale Raum kugelförmig ist.

**15.** Verfahren nach Anspruch 12 oder 14, wobei die in den Attributinformationen enthalten Positionsinformationen (C) eine Mittelposition des Raumes spezifizieren und die in den Attributinformationen enthalten Entfernungsinformationen (R) einen Radius des betreffenden Raumes spezifizieren.

**16.** Verfahren nach einem der vorangehenden Ansprüche, wobei - in dem Schritt des Sendens von Attributinformationen - die Nutzerstationsposition (L1) durch die Nutzerstation bestimmt wird und Positionsinformationen, die jene Position identifizieren, durch die Nutzerstation an das Server-System gesendet werden, und das Server-System die Vorerfassungsregion in Abhängigkeit von den gesendeten Positionsinformationen einstellt.

**17.** Verfahren nach einem der vorangehenden Ansprüche, wobei - in dem Schritt des Sendens von Attributinformationen - die Vorerfassungsregion (100) so eingestellt wird (SR1, SR2), dass die Anzahl der Push-Delivery-Räume innerhalb der Region einen Schwellenwert nicht überschreitet.

**18.** Verfahren nach einem der vorangehenden Ansprüche, wobei der Schritt des Sendens von Delivery-Informationen umfasst, in dem Server-System Informationen zu registrieren (A9; B8), die anzeigen, ob Delivery-Informationen für einen bestimmten Push-Delivery-Raum bereits an die Nutzerstation übermittelt wurden oder nicht, und die registrierten Informationen zu verwenden, um zu verhindern, dass die gleichen Delivery-Informationen erneut an die Nutzerstation übermittelt werden.

**19.** Push-Delivery-Dienstangebotsvorrichtung, die ein Server-System (10; 19) und eine Nutzerstation (1) umfasst, zum drahtlosen Übermitteln von Informationen von dem Server-System an die Nutzerstation, wenn sich die Nutzerstation in mindestens einem Push-Delivery-Raum unter mehreren zuvor registrierten Push-Delivery-Räumen (A bis J) befindet, wobei jeder zuvor registrierte Push-Delivery-Raum Delivery-Informationen über den betreffenden Raum besitzt, und wobei die Vorrichtung **gekennzeichnet ist durch**:

ein in dem Server-System angeordnetes Speichermittel (19b, 19c) zum Speichern von Attributinformationen und solcher Delivery-Informationen für jeden der mehreren Push-Delivery-Räume, wobei die Attributinformationen für jeden Raum mindestens Positionsinformationen (C) über eine Position des betreffenden Raumes und Entfernungsinformationen (R) über eine räumliche Erstreckung des betreffenden Raumes enthalten;
ein in der Nutzerstation angeordnetes Mittel zum Erhalten einer Position der Nutzerstation und zum Senden eines Ergebnisses der Positionsbestimmung an das Server-System;
ein in dem Server-System angeordnetes Attributinformationssendemittel (19g) zum Senden - an die Nutzerstation - der Attributinformationen für den oder jeden Raum, der sich innerhalb einer Vorerfassungsregion (100) befindet, die in Abhängigkeit von der Position (L1) der Nutzerstation eingestellt ist;
ein in der Nutzerstation angeordnetes Beurteilungsmittel (308, 301) zum Beurteilen - auf der Grundlage der Attributinformationen für den oder jeden Raum innerhalb der Vorerfassungsregion und einer Position (L1-a, L1-b, L1-c, L2) der Nutzerstation -, ob sich die Nutzerstation innerhalb eines der Räume befindet;
ein in der Nutzerstation angeordnetes Anforderungssendemittel (302), das dafür konfiguriert ist, wenn **durch** das Beurteilungsmittel beurteilt wird, dass sich die Nutzerstation innerhalb eines der Räume befindet, eine Anforderung von der Nutzerstation an das Server-System zur Übermittlung der Delivery-Informationen bezüglich des betreffenden Raumes zu senden; und
ein in dem Server-System angeordnetes Delivery-Informationssendemittel (19g) zum Senden der Delivery-Informationen bezüglich des betreffenden Raumes an die Nutzerstation in Reaktion auf die Anforderung.

**20.** Server-System zur Verwendung in einer Push-Delivery-Dienstangebotsvorrichtung, die dafür geeignet ist, Informationen drahtlos an eine Nutzerstation (1) zu übermitteln, wenn sich die Nutzerstation in mindestens einen Push-Delivery-Raum unter mehreren zuvor registrierten Push-Delivery-Räumen (A bis J) befindet, wobei jeder zuvor registrierte Push-Delivery-Raum Delivery-Informationen über den betreffenden Raum besitzt, und wobei das Server-System (10, 19) **gekennzeichnet ist durch**:

ein Speichermittel (19b, 19c) zum Speichern von Attributinformationen und solcher Delivery-Informationen für jeden der mehreren Push-Delivery-Räume, wobei die Attributinformationen für jeden Raum mindestens Positionsinformationen (C) über eine Position des betreffenden Raumes und Entfernungsinformationen (R) über eine räumliche Erstreckung des betreffenden Raumes enthalten;
ein Attributinformationssendemittel (19g) zum Senden - an die Nutzerstation - der Attributinformationen für den oder jeden Raum, der sich innerhalb einer Vorerfassungsregion (100) befindet, die in Abhängigkeit von der Position (L1) der Nutzerstation eingestellt ist, die **durch** die Nutzerstation an das Server-System gesendet wird;
ein Anforderungsempfangsmittel (19a) zum Empfangen - von der Nutzerstation - einer Anforderung zur Übermittlung der Delivery-Informationen bezüglich eines spezifizierten Raumes der Räume, in denen sich die Nutzerstation - laut Beurteilung **durch** die Nutzerstation - momentan befindet; und
ein Delivery-Informationssendemittel (19g) zum Senden der Delivery-Informationen bezüglich des betreffenden Raumes an die Nutzerstation in Reaktion auf die Anforderung.

21. Server-System nach Anspruch 20, das des Weiteren Folgendes umfasst:

    ein Positionsinformationsempfangsmittel (19a) zum Empfangen - von der Nutzerstation - von Bewegungsinformationen über die Bewegung der Nutzerstation und von Positionsinformationen über eine zuvor ermittelte Position (L1) der Nutzerstation; und
    ein Positionsschätzungsmittel (19f) zum Schätzen einer Position der Nutzerstation auf der Grundlage der empfangenen Bewegungsinformationen und Positionsinformationen.

22. Server-System nach Anspruch 20 oder 21, wobei das Attributinformationssendemittel (19g) dafür geeignet ist, von der Nutzerstation Positionsinformationen zu empfangen, die eine durch die Nutzerstation ermittelte Position der Nutzerstation identifizieren, und die Vorerfassungsregion (100) in Abhängigkeit von den empfangenen Positionsinformationen einzustellen.

23. Server-System nach Anspruch 20, 21 oder 22, wobei das Attributinformationssendemittel (19g) dafür geeignet ist, die Vorerfassungsregion (100) so einzustellen, dass die Anzahl von Push-Delivery-Räumen innerhalb der Region einen Schwellenwert nicht überschreitet.

24. Server-System nach einem der Ansprüche 20 bis 23, wobei das Delivery-Informationssendemittel des Weiteren ein Delivery-Registrierungsmittel (19d) zum Registrieren von Informationen umfasst, die anzeigen, ob Delivery-Informationen für einen bestimmten Push-Delivery-Raum bereits an die Nutzerstation übermittelt wurden oder nicht, und das Delivery-Informationssendemittel (19g) dafür geeignet ist, die registrierten Informationen zu verwenden, um zu verhindern, dass die gleichen Delivery-Informationen noch einmal an die Nutzerstation gesendet werden.

25. Nutzerstation zur Verwendung in einer Push-Delivery-Dienstangebotsvorrichtung, die dafür geeignet ist, Informationen drahtlos von einem Server-System (10, 19) der Vorrichtung an die Nutzerstation zu übermitteln, wenn sich die Nutzerstation in mindestens einem Push-Delivery-Raum unter mehreren zuvor registrierten Push-Delivery-Räumen (A bis J) befindet, wobei jeder zuvor registrierte Push-Delivery-Raum Delivery-Informationen bezüglich des betreffenden Raumes besitzt, und das Server-System Attributinformationen und Delivery-Informationen für jeden der mehreren Push-Delivery-Räume speichert, wobei die Attributinformationen für jeden Raum mindestens Positionsinformationen (C) über eine Position des betreffenden Raumes und Entfernungsinformationen (R) über eine räumliche Erstreckung des betreffenden Raumes enthalten, wobei die Nutzerstation **gekennzeichnet ist durch**:

    ein Mittel zum Erhalten einer Position der Nutzerstation und zum Senden eines Ergebnisses der Positionsbestimmung an das Server-System;
    ein Attributinformationsaufzeichnungsmittel (303) zum Empfangen - von dem Server-System - der Attributinformationen für den oder jeden Raum, der sich innerhalb einer Vorerfassungsregion (100) befindet, die in Abhängigkeit von einer Position (L1) der Nutzerstation eingestellt ist, und zum Aufzeichnen der empfangenen Attributinformationen;
    ein Beurteilungsmittel (308, 310) zum Beurteilen - auf der Grundlage der aufgezeichneten Attributinformationen für den oder jeden Raum innerhalb der Vorerfassungsregion und einer Position der Nutzerstation -, ob sich die Nutzerstation innerhalb eines der Räume befindet; und
    ein Anforderungssendemittel (302), das dafür geeignet ist, wenn **durch** das Beurteilungsmittel beurteilt wird, dass sich die Nutzerstation innerhalb eines der Räume befindet, eine Anforderung für die Übermittlung der Delivery-Informationen bezüglich des betreffenden Raumes an das Server-System zu senden.

26. Nutzerstation nach Anspruch 25, wobei das Beurteilungsmittel (308) dafür geeignet ist, anhand einer selbst-prognostizierten Position (L1-a, L1-b, L1-c, L2) der Nutzerstation mindestens eine vorläufige Beurteilung (A12) vorzunehmen, ob sich die Nutzerstation innerhalb eines der Räume befindet, und des Weiteren dafür geeignet ist, wenn die vorläufige Beurteilung besagt, dass sich die Nutzerstation innerhalb eines der Räume befindet, anhand einer gemessenen Position der Nutzerstation eine endgültige Beurteilung (A2) vorzunehmen, ob sich die Nutzerstation innerhalb eines der Räume befindet.

27. Nutzerstation nach Anspruch 26, wobei das Beurteilungsmittel (308) dafür geeignet ist, nachdem die vorläufige Beurteilung anhand einer ermittelten Nutzerstationsposition (L1-a, L1-b, L1-c, L2) getroffen wurde, die Nutzerstationsposition erneut zu ermitteln und die endgültige Beurteilung auf der Grundlage der neu ermittelten Nutzerstationsposition (L2) vorzunehmen.

**28.** Nutzerstation nach Anspruch 26 oder 27, wobei das Beurteilungsmittel (308) dafür geeignet ist, die Nutzerstationsposition (L1-a, L1-b, L1-c) für mindestens eine vorläufige Beurteilung unter Verwendung einer Nicht-GPS-Satellitenquelle zu ermitteln.

**29.** Nutzerstation nach einem der Ansprüche 26 bis 28, wobei das Beurteilungsmittel ein Schätzmittel (305, 306, 301) umfasst, das geeignet ist, die Nutzerstationsposition (L1-a, L1-b, L1-c) für mindestens eine vorläufige Beurteilung unter Nutzung von Bewegungsinformationen über die Bewegung der Nutzerstation zu schätzen, um eine zuvor ermittelte Position (L1) der Nutzerstation zu modifizieren.

**30.** Nutzerstation nach einem der Ansprüche 26 bis 28, die Weiteren Folgendes umfasst:

ein Schätzungsinformationssendemittel (304) zum Senden - an das Server-System - von Bewegungsinformationen über die Bewegung der Nutzerstation und von Positionsinformationen über eine zuvor ermittelte Nutzerstationsposition (L1) zur Verwendung durch das Server-System zum Schätzen der Nutzerstationsposition (L1-a, L1-b, L1-c).

**31.** Nutzerstation nach einem der Ansprüche 26 bis 30, wobei das Beurteilungsmittel (308) dafür geeignet ist, die Nutzerstationsposition (L2) für die endgültige Beurteilung unter Verwendung von GPS-Satelliten zu ermitteln.

**32.** Nutzerstation nach Anspruch 31, wobei das Beurteilungsmittel (308) dafür geeignet ist, die Nutzerstationsposition (L2), die durch die Nutzerstation bei der Bestimmung der Nutzerstationsposition (L2) für die endgültige Beurteilung erhalten wurde, an das Server-System zu senden, so dass das Server-System einen in den übermittelten Positionsdaten erhalten Fehler korrigieren kann, wobei das Beurteilungsmittel des Weiteren dafür geeignet ist, die endgültige Beurteilung auf der Grundlage der korrigierten Positionsdaten vorzunehmen.

**33.** Nutzerstation nach einem der Ansprüche 25 bis 32, die des Weiteren dafür geeignet ist, die Nutzerstationsposition (L1), die zum Einstellen der Vorerfassungsregion (100) verwendet wird, unter Verwendung von GPS-Satelliten zu ermitteln und Positionsinformationen, die die betreffende Position spezifizieren, an das Server-System zu senden, damit das Server-System sie zum Einzustellen der Vorerfassungsregion (100) verwenden kann.

**Revendications**

**1.** Service de délivrance push fournissant un procédé pour délivrer une information par liaison sans fil depuis un serveur (10 ; 19) à une station utilisateur (1) lorsque la station utilisateur est située dans au moins un espace de délivrance push parmi une pluralité d'espaces de délivrance push préenregistrés (A à J), chaque espace de délivrance push préenregistré et possédant une information de délivrance ayant trait à l'espace concerné, et le procédé étant **caractérisé par** les étapes consistant à :

conserver dans ledit serveur une information d'attribut et cette information de délivrance pour chacun de la pluralité d'espaces de délivrance push, l'information d'attribut pour chaque espace comprenant au moins une information de position (C) spécifiant une position de l'espace concerné et une information de plage (R) ayant trait à une étendue de l'espace concerné ;
obtenir une position (L1) de la station utilisateur et transmettre un résultat de l'emplacement au serveur ;
transmettre du serveur à la station utilisateur l'information d'attribut pour le ou chaque espace qui se trouve à l'intérieur d'une région de pré-lecture (100) déterminée selon la position (L1) de la station utilisateur ;
évaluer dans la station utilisateur, en fonction de l'information d'attribut pour le ou chaque espace à l'intérieur de ladite région de pré-lecture et en fonction d'une position (L1-a, L1-b, L1-c ; L2) de la station utilisateur, si la station utilisateur se trouve dans l'un des espaces ;
s'il est évalué par la station utilisateur que la station utilisateur se trouve à l'intérieur d'un des espaces, transmettre une requête depuis la station utilisateur au serveur pour délivrer l'information de délivrance ayant trait à l'espace concerné ; et
côté serveur, transmettre l'information de délivrance ayant trait à l'espace concerné à la station utilisateur en réponse à la requête.

2. Procédé selon la revendication 1, dans lequel l'étape de décision comporte :

   l'exécution d'au moins une décision provisoire (A12) si la station utilisateur se trouve dans l'un desdits espaces en fonction d'une position auto-prédite (L1-a, L1-b, L1-cf) de la station utilisateur ; et
   si une telle décision provisoire est que la station utilisateur se trouve à l'intérieur d'un desdits espaces, l'exécution d'une décision finale (A6) si la station utilisateur se trouve dans l'un des espaces en fonction d'une position mesurée de la station utilisateur.

3. Procédé selon la revendication 2, dans lequel, après mise en oeuvre de la décision provisoire, la position de la station utilisateur est de nouveau déterminée et la décision finale est basée sur la position nouvellement déterminée (L2) de la station utilisateur.

4. Procédé selon la revendication 2 ou 3, dans lequel la position de la station utilisateur (L1-a, L1-b, L1-c) pour au moins une décision provisoire (A12) est déterminée en utilisant une source satellite non GPS.

5. Procédé selon la revendication 2, 3 ou 4, dans lequel la position de la station utilisateur (L1-a, L1-b, L1-c) pour au moins une décision provisoire est estimée (A10) en utilisant une information de déplacement, obtenue par la station utilisateur et ayant trait au déplacement de la station utilisateur, pour modifier une position de station utilisateur déterminée précédemment (L1).

6. Procédé selon la revendication 5, dans lequel la station utilisateur délivre ladite information de déplacement et une information de position ayant trait à la position déterminée précédemment (L1) au serveur, et la position de la station utilisateur (L1-a, L1-b, L1-c) pour la décision provisoire est estimée par le serveur en fonction de l'information de déplacement et de l'information de position délivrées.

7. Procédé selon l'une quelconque des revendications 2 à 6, dans lequel la position de station utilisateur (L2) pour la décision finale est déterminée en utilisant des satellites GPS (A2 ; B2).

8. Procédé selon la revendication 7, dans lequel la station utilisateur délivre la position de la station utilisateur (L2), obtenue par la station utilisateur lors de la détermination de la position de station utilisateur pour la décision finale, au serveur, et le serveur corrige (A3) une erreur de positionnement contenue dans les données de position délivrées, et la position de station utilisateur pour la décision finale est basée sur les données de position corrigées.

9. Procédé selon l'une quelconque des revendications précédentes, dans lequel la position de la station utilisateur (L1) utilisée pour déterminer la région de pré-lecture (100) au cours de l'étape de transmission d'information d'attribut est déterminée en utilisant des satellites GPS.

10. Procédé selon l'une quelconque des revendications précédentes, dans lequel ladite région de pré-lecture (100) est une région circulaire ou sphérique présentant la position de la station utilisateur (L1) en tant que position centrale et s'étendant selon un rayon prédéterminé (r) à partir de la position centrale.

11. Procédé selon l'une quelconque des revendications précédentes, dans lequel chaque espace de délivrance push est un espace bidimensionnel.

12. Procédé selon la revendication 11, dans lequel chaque espace bidimensionnel est circulaire.

13. Procédé selon l'une quelconque des revendications 1 à 10, dans lequel chaque espace de délivrance push est un espace tridimensionnel.

14. Procédé selon la revendication 13, dans lequel chaque espace tridimensionnel est sphérique.

15. Procédé selon la revendication 12 ou 14, dans lequel ladite information de position (C) comprise dans l'information d'attribut spécifie une position centrale de l'espace et l'information de plage (R) comprise dans l'information d'attribut spécifie un rayon de l'espace concerné.

16. Procédé selon l'une quelconque des revendications précédentes, dans lequel, au cours de l'étape de transmission d'information d'attribut, la position de station utilisateur (L1) est déterminée par la station utilisateur et l'information de position identifiant cette position est transmise par la station utilisateur au serveur, et le serveur détermine la région de pré-lecture selon l'information de position transmise.

**17.** Procédé selon l'une quelconque des revendications précédentes, dans lequel, au cours de l'étape de transmission d'information d'attribut, la région de pré-lecture (100) est déterminée (SR1, SR2) de sorte que le nombre desdits espaces de délivrance push à l'intérieur de la région ne dépasse pas une valeur seuil.

**18.** Procédé selon l'une quelconque des revendications précédentes, dans lequel l'étape de transmission d'information de délivrance comporte l'enregistrement (A9 ; B8) dans le serveur d'une information indiquant si oui ou non une information de délivrance pour un espace de délivrance push particulier a déjà été délivrée à la station utilisateur et l'utilisation de l'information enregistrée pour éviter que la même information de délivrance soit délivrée de nouveau à la station utilisateur.

**19.** Appareil fournissant un service de délivrance push, comportant un serveur (10 ; 19) et une station utilisateur (1), pour délivrer une information par liaison sans fil du serveur à la station utilisateur lorsque la station utilisateur est située dans un espace de délivrance push parmi une pluralité d'espaces de délivrance push préenregistrés (A à J), chaque espace de délivrance push préenregistré possédant une information de délivrance ayant trait à l'espace concerné, et l'appareil étant **caractérisé par** :

un moyen de conservation (19b, 19c), prévu dans le serveur, pour conserver une information d'attribut et cette information de délivrance pour chacun de la pluralité d'espaces de délivrance push, l'information d'attribut pour chaque espace comprenant au moins une information de position (C) ayant trait à une position de l'espace concerné et une information de plage (R) ayant trait à une étendue de l'espace concerné ;
un moyen prévu dans la station utilisateur pour obtenir une position de la station utilisateur et transmettre un résultat de positionnement au serveur ;
un moyen de transmission d'information d'attribut (19g), prévu dans le serveur, pour transmettre à la station utilisateur l'information d'attribut pour le ou chaque espace qui se trouve à l'intérieur d'une région de pré-lecture (100) déterminée selon la position (L1) de la station utilisateur ;
un moyen de décision (308, 301), prévu dans la station utilisateur, pour évaluer, en fonction de l'information attribut pour le ou chaque espace à l'intérieur de ladite région de pré-lecture et en fonction d'une position (L1-a, L1-b, L1-c, L2) de la station utilisateur, si la station utilisateur se trouve à l'intérieur d'un des espaces ;
un moyen de transmission de requête (302), prévu dans la station utilisateur et permettant, s'il est évalué par le moyen de décision que la station utilisateur se trouve dans l'un desdits espaces, de transmettre une requête de la station utilisateur au serveur pour délivrer l'information de délivrance ayant trait à l'espace concerné ; et
un moyen de transmission d'information de délivrance (19g), prévu dans le serveur, pour transmettre l'information de délivrance ayant trait à l'espace concerné à la station utilisateur en réponse à la requête.

**20.** Serveur, utilisé dans un appareil fournissant un service de délivrance push adapté pour délivrer une information par liaison sans fil à une station utilisateur (1) lorsque la station utilisateur est située dans au moins un espace de délivrance push parmi une pluralité d'espaces de délivrance push préenregistrés (A à J), chaque espace de délivrance push préenregistré possédant une information de délivrance ayant trait à l'espace concerné, et le serveur (10, 19) étant **caractérisé par** :

un moyen de conservation (19b, 19c) pour conserver une information d'attribut et cette information de délivrance pour chacun de la pluralité d'espaces de délivrance push, l'information d'attribut pour chaque espace comprenant au moins une information de position (C) ayant trait à une position de l'espace concerné et une information de plage (R) ayant trait à une étendue de l'espace concerné ;
un moyen de transmission d'information d'attribut (19g) pour transmettre à la station utilisateur l'information d'attribut pour le ou chaque espace qui se trouve à l'intérieur d'une région de pré-lecture (100) déterminée selon une position (L1) de la station utilisateur transmise au serveur par la station utilisateur ;
un moyen de réception de requête (19a) pour recevoir de la station utilisateur une requête pour délivrer l'information de délivrance ayant trait à l'un spécifié des espaces dans lequel la station utilisateur se trouve présentement située ; et
un moyen de transmission d'information de délivrance (19g) pour transmettre l'information de délivrance ayant trait à l'espace concerné à la station utilisateur en réponse à la requête.

**21.** Serveur selon la revendication 20, comportant en outre :

un moyen de réception d'information de position (19a) pour recevoir depuis la station utilisateur une information de déplacement, ayant trait au déplacement de la station utilisateur, et une information de position ayant trait à une position déterminée précédemment (L1) de la station utilisateur ; et

un moyen d'estimation de position (19f) pour estimer une position de la station utilisateur en fonction de l'information de déplacement et de l'information de position reçues.

**22.** Serveur selon la revendication 20 ou 21, dans lequel ledit moyen de transmission d'information d'attribut (19g) permet de recevoir depuis la station utilisateur une information de position identifiant une position de la station utilisateur déterminée par la station utilisateur et pour déterminer la région de pré-lecture (100) selon l'information de position reçue.

**23.** Serveur selon la revendication 20, 21 ou 22, dans lequel le moyen de transmission d'information d'attribut (19g) permet de déterminer la région de pré-lecture (100) de sorte que le nombre d'espaces de délivrance push à l'intérieur de la région n'excède pas une valeur de seuil.

**24.** Serveur selon l'une quelconque des revendications 20 à 23, dans lequel le moyen de transmission d'information de délivrance comporte en outre un moyen d'enregistrement de délivrance (19d) pour enregistrer une information indiquant si oui ou non une information de délivrance pour un espace de délivrance push particulier a déjà été délivrée à la station utilisateur, et le moyen de transmission d'information de délivrance (19g) permet d'utiliser l'information enregistrée pour éviter que la même information de délivrance soit à nouveau délivrée à la station utilisateur.

**25.** Station utilisateur, utilisée dans un appareil fournissant un service de délivrance push adapté pour délivrer une information par liaison sans fil depuis un serveur (10, 19) de l'appareil à la station utilisateur lorsque la station utilisateur est située dans au moins un espace de délivrance push parmi une pluralité d'espaces de délivrance push préenregistrés (A à J), chaque espace de délivrance push préenregistré possédant une information de délivrance ayant trait à l'espace concerné, et le serveur conservant une information d'attribut et une information de délivrance pour chacun de la pluralité d'espaces de délivrance push, l'information d'attribut pour chaque espace comprenant au moins une information de position (C) ayant trait à une position de l'espace concerné et une information de plage (R) ayant trait à une étendue de l'espace concerné, ladite station utilisateur étant **caractérisée par** :

un moyen pour obtenir une position de la station utilisateur et transmettre un résultat du positionnement au serveur ;

un moyen d'enregistrement d'information d'attribut (303) pour recevoir depuis le serveur l'information d'attribut pour le ou chaque espace qui se trouve à l'intérieur d'une région de pré-lecture (100) déterminée selon une position (L1) de la station utilisateur, et pour enregistrer l'information d'attribut reçue ;

un moyen de décision (308, 310) pour évaluer, en fonction de l'information d'attribut enregistrée pour le ou chaque espace à l'intérieur de ladite région de pré-lecture et d'une position de la station utilisateur, si la station utilisateur se trouve à l'intérieur d'un des espaces ; et

un moyen de transmission de requête (302) permettant, s'il est évalué par le moyen de décision que la station utilisateur se trouve dans un des espaces, de transmettre une requête au serveur pour délivrer l'information de délivrance ayant trait à l'espace concerné.

**26.** Station utilisateur selon la revendication 25, dans laquelle le moyen de décision (308) permet de rendre au moins une décision provisoire (A12) si la station utilisateur se trouve dans un des espaces en fonction d'une position auto-prédite (L1-a, L1-b, L1-c, L2) de la station utilisateur et permet en outre, si la décision provisoire est que la station utilisateur se trouve dans un des espaces, de rendre une décision finale (A2) si la station utilisateur se trouve dans un des espaces en fonction d'une position mesurée de la station utilisateur.

**27.** Station utilisateur selon la revendication 26, dans laquelle ledit moyen de décision (308) permet, après avoir rendu la décision provisoire en fonction d'une position déterminée de la station utilisateur (L1-a, L1-b, L1-c, L2), de déterminer de nouveau la position de la station utilisateur et de rendre la décision finale en fonction de la position de la station utilisateur nouvellement déterminée (L2).

**28.** Station utilisateur selon la revendication 26 ou 27, dans laquelle le moyen de décision (308) permet de déterminer la position de la station utilisateur (L1-a, L1-b, L1-c) pour au moins une décision provisoire en utilisant une source satellite non GPS.

**29.** Station utilisateur selon l'une quelconque des revendications 26 à 28, dans laquelle le moyen de décision comporte un moyen d'estimation (305, 306, 301) permettant d'estimer la position de la station utilisateur (L1-a, L1-b, L1-c) pour au moins une décision provisoire en utilisant une information de déplacement ayant trait au déplacement de la station utilisateur pour modifier une position précédemment déterminée (L1) de la station utilisateur.

**30.** Station utilisateur selon l'une quelconque des revendications 26 à 28, comportant en outre un moyen de transmission d'information d'estimation (304) pour transmettre au serveur une information de déplacement ayant trait au déplacement de la station utilisateur et une information de position ayant trait à une position de station utilisateur précédemment déterminée (L1) utilisée par le serveur pour estimer la position de la station utilisateur (L1-a, L1-b, L1-c).

**31.** Station utilisateur selon l'une quelconque des revendications 26 à 30, dans laquelle le moyen de décision (308) permet de déterminer la position de la station utilisateur (L2) pour la décision finale en utilisant des satellites GPS.

**32.** Station utilisateur selon la revendication 31, dans laquelle le moyen de décision (308) permet de délivrer la position de la station utilisateur (L2), obtenue par la station utilisateur lors de la détermination de la position de la station utilisateur (L2) pour la décision finale, au serveur de sorte que le serveur peut corriger une erreur obtenue dans les données de position délivrées, le moyen de décision permettant en outre mettre en oeuvre la décision finale en fonction des données de position corrigées.

**33.** Station utilisateur selon l'une quelconque des revendications 25 à 32, permettant en outre de déterminer la position de la station utilisateur (L1) utilisée pour déterminer la région de pré-lecture (100) en utilisant des satellites GPS et pour transmettre une information de position spécifiant la position concernée au serveur pour que le serveur l'utilise afin de déterminer la région de pré-lecture (100).

# FIG. 1

TIME SERVICE FROM 17:00 TODAY
· FROZEN FOODS 50% OFF
· DELICATESSEN 20% OFF
DON'T MISS!

ARTIFICIAL SATELLITE

90 90 90 90

POSITIONING INFORMATION DELIVERY AREA

150

100

G

H

I

J

A

B

C

Q2

F

PRE-READING AREA

1

MOBILE STATION (MOVE)

RADIUS R

D

Q1

E

INFORMATION DELIVERY AREA

THE HIT TOY ARRIVED JUST NOW, TO BE SOLD TO THE FIRST 50 ARRIVALS

200

101: COMMUNICATION NETWORK

REQUEST & INFORMATION DELIVERY

POSITIONING

DATA CENTER

19

POSITIONING SERVER

10

EP 1 355 470 B1

# FIG. 2

EP 1 355 470 B1

# FIG. 3

EP 1 355 470 B1

F I G. 4

15

| BALLOON NO. | SPACE RANGE INFORMATION | SERVICE INFORMATION TO BE PROVIDED |
|---|---|---|
| 1 | A/X/0/3 | PUB |
| 2 | A/X/3/1 | HOSPITAL (SURGERY) |
| 3 | A/X/3/1 | HOSPITAL (INTERNAL) |
| 4 | A/X/3/1 | HOSPITAL (STOMACH AND INTESTINES) |
| 5 | A/X/3/1 | HOSPITAL (NOSE, EAR AND THROAT) |
| 6 | A/X/2/1 | HOTEL |
| 7 | A/X/1/1 | GASOLINE STATION |
| 8 | B/X/0/2 | PREPARATORY SCHOOL (SENIOR HIGH SCHOOL FIRST-GRADE) |
| 9 | B/X/0/2 | PREPARATORY SCHOOL (SENIOR HIGH SCHOOL THIRD-GRADE) |
| 10 | B/X/2/1 | ITALIAN RESTAURANT |
| 11 | B/X/1/1 | TAX OFFICE |
| 12 | C/X/0/3 | STADIUM |
| 13 | D/X/0/4 | RADIO WAVE TOWER |
| 14 | A-1/X/1/0.5 | RESTAURANT |
| 15 | 1/X/1/0.5 | RAILWAY STATION |
| 16 | A+1/X/1/0.5 | FIRE STATION |
| 17 | A-1/X/2/0.5 | TEMPLE |
| 18 | A/X/2/0.5 | HOUSEHOLD ELECTRIC APPLIANCES SHOP (PERSONAL COMPUTER) |
| 19 | A/X/2/0.5 | HOUSEHOLD ELECTRIC APPLIANCES SHOP (CELLULAR PHONE) |
| 20 | A/X/2/0.5 | HOUSEHOLD ELECTRIC APPLIANCES SHOP (REFRIGERATOR) |
| 21 | A/X/3/0.5 | CHINESE RESTAURANT |
| 22 | D/X/4/0.5 | ART MUSEUM |
| 23 | D/X/4/0.5 | BOOK SHOP |

FIG. 5(a)

FIG. 5(b)

FIG. 5(c)

FIG. 5(d)

FIG. 5(e)

FIG. 5(f)

FIG. 5(g)

FIG. 5(h)

EP 1 355 470 B1

FIG. 6

150:TOWN AREA

BALLOON

ADVERTISEMENT PUSH DELIVERY

B

F I G. 7

19:DATA CENTER

19f — CALCULATING UNIT

19e:INFORMATION FILTER

19a — PROCESS ACCEPTING UNIT

19b — DELIVERY AREA DATA

19c — DELIVERY INFORMATION FOR EACH AREA

19d — DELIVERED INFORMATION

19g:PROVIDING UNIT (SERVER TRANSMITTING UNIT)

101

EP 1 355 470 B1

FIG. 8 (a)

| DELIVERY AREA ID | DELIVERY AREA POSITION INFORMATION | DELIVERY AREA RADIUS | INFORMATION CATEGORY DATA | DELIVERY DATA LEADING ADDRESS |
|---|---|---|---|---|
| DELIVERY AREA ID | DELIVERY AREA POSITION INFORMATION | DELIVERY AREA RADIUS | INFORMATION CATEGORY DATA | DELIVERY DATA LEADING ADDRESS |
| : | : | : | : | : |
| DELIVERY AREA ID | DELIVERY AREA POSITION INFORMATION | DELIVERY AREA RADIUS | INFORMATION CATEGORY DATA | DELIVERY DATA LEADING ADDRESS |

FIG. 8 (b)

| DELIVERY AREA ID | DELIVERY DATA |
|---|---|
| DELIVERY AREA ID | DELIVERY DATA |
| : | : |
| DELIVERY AREA ID | DELIVERY DATA |

FIG. 8 (c)

| USER ID | DELIVERED AREA ID(1) | DELIVERED AREA ID(2) | .. | DELIVERED AREA ID(n) |
|---|---|---|---|---|
| USER ID | DELIVERED AREA ID(1) | DELIVERED AREA ID(2) | .. | DELIVERED AREA ID(n) |
| : | : | : | .. | : |
| USER ID | DELIVERED AREA ID(1) | DELIVERED AREA ID(2) | .. | DELIVERED AREA ID(n) |

F I G. 9 (a)

150

INFORMATION DELIVERY AREA

r2

POSITION OF
MOBILE
STATION

r1

PRE-
READING
AREA

CHANGE OF RADIUS OF PRE-READING AREA
(r1 TO r2)

F I G. 9 (b)

WHEN A THRESHOLD VALUE OF THE NUMBER OF
DELIVERY AREAS IS 10, RADIUS OF PRE-READING
AREA IS CHANGED FROM r1 TO r2

| PRE-READING<br>AREA RADIUS | THE NUMBER OF<br>DELIVERY AREAS |
|---|---|
| r1 | 14 |
| r2 | 7 |

FIG. 10

FIG. 11

EP 1 355 470 B1

TIME SERVICE FROM
17:00 TODAY
· FROZEN FOODS 50% OFF
· DELICATESSEN 20% OFF
DON'T MISS

C1  R1

L2 (L1-c)

L1-b

L1-a

L1    r

POSITION OF
MOBILE STATION

G: INFORMATION
DELIVERY AREA
(BALLOON)

100:PRE-READING AREA

OWN POSITION DATA

L1, L2 ··· STATION'S OWN POSITION INFORMATION (MEASURED POSITION)
L1-a, L1-b ··· STATION'S SELF-PREDICTED POSITION
r:RADIUS OF PRE-READING AREA
C1:CENTER POSITION INFORMATION ON INFORMATION DELIVERY AREA
R1:RADIUS OF INFORMATION DELIVERY AREA

(0,0)

y

x

EP 1 355 470 B1

FIG. 12

DELIVERY AREA POSITION PRE-READING PROCESS
(PREDICTING SYSTEM)

48

FIG. 13

DATA FORMAT FOR TRANSMITTING/
RECEIVING POSITION INFORMATION

F I G. 1 4

DATA FORMAT FOR PRE-READING AREA REQUEST AND NOTIFICATION

FIG. 15

DELIVERY AREA RADIUS ADJUSTING PROCESS

FIG. 16

DATA FORMAT FOR INFORMATION DELIVERY REQUEST/
DELIVERY/ACKNOWLEDGEMENT

FIG. 17

USER STATION
(MOBILE STATION)

DATA CENTER

START APPLICATION FOR
DELIVERY INFORMATION
CATEGORY SETTING — C1

DELIVERY INFORMATION CATEGORY LIST TRANSMIT REQUEST

PROCESSING

TRANSMIT DELIVERY INFORMATION CATEGORY LIST

SELECT AN INFORMATION
CATEGORY THAT USER — C2
DESIRES TO BE DELIVERED

DELIVERY INFORMATION CATEGORY REGISTER REQUEST

REGISTER THE
DELIVERY CATEGORY — C3

DELIVERY INFORMATION CATEGORY
REGISTRATION COMPLETE ACKNOWLEDGEMENT

DELIVERY (CONTENTS) INFORMATION CATEGORY
REGISTERING PROCESS

53

FIG. 18

DELIVERY AREA POSITION PRE-READING PROCESS
(MEASURING SYSTEM)

F I G. 1 9 (a)

150

OPERATION IN CASE THE NUMBER OF
INFORMATION DELIVERY AREAS IS PLURAL

F I G. 1 9 (b)

MOBILE STATION MOVES FROM L1 TO L3,
INFORMATION IN AREA J IS DELIVERED

| STATION'S POSITION | PRE-READING AREA | INFORMATION DELIVERY |
|---|---|---|
| L1 | A  B | NONE |
| L2 | C  F  J | NONE |
| L3 | – | AREA J |

EP 1 355 470 B1

# F I G.  2 0

EXAMPLE (1) OF SERVICE FOR THE PURPOSE OF ATTRACTING CUSTOMERS
(SUPPORTING SALES)

PUSH DELIVERY AREA E

PUSH DELIVERY AREA E

I WONDER IF I HAVE A LOOK ON MY WAY HOME.

ANY VEGETABLE 100 YEN TILL TODAY

# FIG. 21

EXAMPLE (2) OF SERVICE FOR THE PURPOSE OF
ATTRACTING CUSTOMERS

PUSH DELIVERY AREA F

PUSH INFORMATION TO
PEOPLE IN THE AREA

COUPON! I WONDER IF
I HAVE LUNCH THERE

[ON-LINE COUPON]
10% DISCOUNT
FOR THIS COUPON
TILL 16:00 TODAY

EP 1 355 470 B1

EP 1 355 470 B1

F I G . 2 2

EXAMPLE (1) OF SERVICE FOR THE PURPOSE OF
NOTIFYING INFORMATION

PUSH DELIVERY AREA G

EP 1 355 470 B1

# F I G. 2 3

EXAMPLE (2) OF SERVICE FOR THE PURPOSE OF SHARING INFORMATION

PUSH DELIVERY AREA H

REFER TO BULLETIN BOARD

I PLAY GUITAR. WILL YOU MAKE A BAND WITH ME?

YES, BY ALL MEANS.

FIG. 24

RESTAURANT LAYER

TIME SERVICE LAYER

RECOMMENDED SPOT LAYER

·
·
·

TOY SHOP LAYER

CHILDREN'S CLOTHING
SHOP LAYER

**EP 1 355 470 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0154421 A
- WO 9945732 A
- JP 2000318537 A